(19) Europäisches Patentamt
European Patent Office
Office européen des brevets

(11) EP 2 876 820 B1

(12) **EUROPEAN PATENT SPECIFICATION**

(45) Date of publication and mention of the grant of the patent:
**08.11.2017 Bulletin 2017/45**

(51) Int Cl.:
***H04B 7/08*** *(2006.01)* ***H04L 25/03*** *(2006.01)*

(21) Application number: **13193971.2**

(22) Date of filing: **22.11.2013**

(54) **Methods and nodes in a wireless communication system**

Verfahren und Knoten in einem drahtlosen Kommunikationssystem

Procédés et noeuds dans un système de communication sans fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.05.2015 Bulletin 2015/22**

(73) Proprietor: **Huawei Technologies Co., Ltd.**
**Longgang District**
**Shenzhen, Guangdong 518129 (CN)**

(72) Inventors:
- **Kant, Shashi**
  **22369 Lund (SE)**
- **Rusek, Fredrik**
  **22369 Lund (SE)**
- **Hu, Sha**
  **22369 Lund (SE)**
- **Priyanto, Basuki Endah**
  **22369 Lund (SE)**

(74) Representative: **Thun, Clemens et al**
**Mitscherlich PartmbB**
**Patent- und Rechtsanwälte**
**Sonnenstraße 33**
**80331 München (DE)**

(56) References cited:
**US-A1- 2008 069 262** **US-A1- 2012 219 097**
**US-B1- 8 559 543**

EP 2 876 820 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

Implementations described herein generally relate to a user equipment and a method in a user equipment. In particular, an improved MIMO detection scheme is herein described.

### BACKGROUND

A User Equipment (UE), also known as a recipient, a mobile station, wireless terminal and/ or mobile terminal is enabled to communicate wirelessly in a wireless communication system, sometimes also referred to as a cellular radio system or a wireless communication network. The communication may be made, e.g., between UEs, between a UE and a wire connected telephone and/ or between a UE and a server via a Radio Access Network (RAN) and possibly one or more core networks. The wireless communication may comprise various communication services such as voice, messaging, packet data, video, broadcast, etc.

The UE may further be referred to as mobile telephone, cellular telephone, computer tablet or laptop with wireless capability, etc. The UE in the present context may be, for example, portable, pocket-storable, hand-held, computer-comprised, or vehicle-mounted mobile devices, enabled to communicate voice and/ or data, via the radio access network, with another entity, such as another UE or a server.

The wireless communication system covers a geographical area which is, in some access technologies, divided into cell areas, with each cell area being served by a radio network node, or base station, e.g., a Radio Base Station (RBS) or Base Transceiver Station (BTS), which in some networks may be referred to as "eNB", "eNodeB", "NodeB" or "B node", depending on the technology and/ or terminology used.

Sometimes, the expression "cell" may be used for denoting the radio network node itself. However, the cell may also in normal terminology be used for the geographical area where radio coverage is provided by the radio network node at a base station site. One radio network node, situated on the base station site, may serve one or several cells. The radio network nodes may communicate over the air interface operating on radio frequencies with any UE within range of the respective radio network node.

In some radio access networks, several radio network nodes may be connected, e.g., by landlines or microwave, to a Radio Network Controller (RNC), e.g., in Universal Mobile Telecommunications System (UMTS). The RNC, also sometimes termed Base Station Controller (BSC), e.g., in GSM, may supervise and coordinate various activities of the plural radio network nodes connected thereto. GSM is an abbreviation for Global System for Mobile Communications (originally: Groupe Special Mobile).

In 3rd Generation Partnership Project (3GPP) Long Term Evolution (LTE)/ LTE-Advanced, radio network nodes, which may be referred to as eNodeBs or eNBs, may be connected to a gateway, e.g., a radio access gateway, to one or more core networks.

In the present context, the expressions downlink (DL), downstream link or forward link may be used for the transmission path from the radio network node to the UE. The expression uplink (UL), upstream link or reverse link may be used for the transmission path in the opposite direction, i.e., from the UE to the radio network node.

Beyond 3G mobile communication systems, such as e.g., 3GPP LTE, offer high data rate in the downlink by employing Multiple Input and Multiple-Output (MIMO) with Orthogonal Frequency Division Multiplexing (OFDM) access scheme at the UE receiver. In LTE, e.g., UE category 5 (supporting 4x4 MIMO), downlink can support up to 300 Mbps data rate; and in LTE-Advanced, e.g., UE category 8, can support data rates up to 3 Gbps (Gigabits per second), i.e., up to 8 layers.

In order to meet these high data rate requirements in the typical scenarios, a high performing (near-optimal) but low complexity MIMO detector is sought. However, MIMO detection is a challenging task; consider $N$x$N$ MIMO systems with M-QAM inputs. Then, the complexity of full max-log-MAP (MLM) detection is $O(M^N)$ (MAP = Maximum A-posteriori). For example, LTE/ LTE-A supports 4x4 MIMO with 64-QAM (i.e., $N$=4, $M$=64), and in the near future this will be extended into $N$=8, and possibly $M$=256; this gives complexity levels ~1.6e7 and ~1.8e19, respectively. Even the first number is far beyond what is doable in a prior art UE according to previously known solutions.

A MIMO detector is sought, that is robust against, large $N$ and $M$, and various channel code rates. Further, an efficient implementation of such detector is also required. Hence, four requirements may be put on such detector, namely:

(i) The detector must be of constant complexity (variants of sphere detection ruled out).

(ii) The number of arithmetic operations must be kept low.

(iii) The detector is robust against large $M$ (the complexity should only scale mildly with $M$) and all the various channel

code rates (variants of K-best ruled out).

(iv) The performance must be almost as good as a full search, i.e., full Max-log-Maximum A-posteriori (MLM).

For example, US 8,559,543 B1 refers to a method for soft-decision maximum likelihood demodulation for decoding a data vector transmitted by a multiple-output transmitter, in a multiple-input multiple-output (MIMO) communications channel, comprising obtaining a plurality of candidate signal values associated with the transmitted data vector, partitioning the candidate signal values into a plurality of signal bit groups, performing a sphere search over the candidate signal values within a search radius value to determine a smallest distance metric for each signal bit group, updating the search radius value based on a current smallest distance metric for each signal bit group, selecting a first set of signal streams of the transmitted data vector for soft decoding, wherein each signal bit group corresponds to a different candidate signal value of the first set of signal streams, generating, for each signal bit group, a tree having layers of nodes, wherein only the candidate signal values in the each signal bit group are associated with the nodes of the tree, computing a log-likelihood ratio (LLR) from the determined smallest distance metrics for each signal bit group using a soft-decision demodulator and decoding the transmitted data vector based on the computed LLR.

Further, US 2012/0219097 A1 relates to a technique for two-step joint demapping based on sphere decoding for log-likelihood ratio (LLR) computation related to a received multiple-input multiple-output (MIMO) signal. The first step of the proposed algorithm comprises a linear minimum mean square error (LMMSE) based detection to form soft symbol estimates of symbols being transmitted. Then, the LMMSE-based soft symbol estimates can be utilized to form a set of constellation points of a stream interfering to a stream of interest. These candidate constellation points can be then subtracted (canceled) from the received signal to improve the LLR computations of the stream of interest. After the cancellation, the maximum ratio combining (MRC) can be applied to each individual stream to form more refined soft symbol estimates as well as an effective signal-to-noise ratio (SNR) estimate. The refined outputs of the MRC can be utilized to compute LLRs of transmitted bits based on the effective SNR and the refined soft symbol estimates associated with all the candidate constellation points from the set. The LLRs of transmitted bits may be employed by a channel decoder.

Further, US 2008/0069262 A1 refers to a method including the steps of: i) listing out all possibilities for first symbol of a two stream signal; ii) determining a second symbol of the two stream signal for each said first symbol listed out, iii) evaluating a metric for each said first symbol and second symbol pair, iv) determining the exact maximum log likelihood ratio for all bits associated with said first symbol using said metrics, v) decoding a codeword- 1 using the maximum log likelihood ratios, vi) re-encoding said codeword- 1 , vii) modulating said re-encoded codeword- 1 , viii) subtracting said modulated re-encoded codeword- 1 from said two stream signal, ix) determining metrics for all possibilities for second symbol in the signal obtained in viii, x) determining the maximum log likelihood ratios for all bits associated with second symbol, and xi); decoding said codeword- 2 using the maximum log likelihood ratios for all bits associated with said second symbol.

According to some prior art solutions, target (i) and parts of target (iii) of the above specified requirements may be partly solved in the following way:

The Minimum Mean Square Error (MMSE) filter is applied and based on the output, only keep $M_k$, ($k \in \{1,...N\}$), signal points at each spatial layer. Then, the path metric may be computed for all combinations of the kept signal points; there are $\prod_{k=1}^{N} M_k$ such combinations. This may, at least to some extent, solve the requirement

(i) since the complexity is constant as the search space for each layer is constraint by the pre-defined numbers $M_k$.

In addition, the requirement (iii) may be partly fulfilled since the search space can be smaller for most of the modulation and coding rates compared to the full search and simultaneously meeting the requirement (i). However, accentuating that it fulfils partly the requirement (iii), i.e., it fails to be robust for higher order modulation alphabet such as e.g., 64 Quadrature Amplitude Modulation (QAM) and higher coding rates since the authors have employed only Linear Minimum Mean Square Error (LMMSE) detector which may be weak in the sense to generate a 'good' small search space. In other words, although it may meet the requirement (iii), it fails to meet (iv) as the initial MMSE-step is too weak to reduce the space of the most-likely candidates, particularly for large modulation, high coding rates and/ or spatially correlated channels, which is desired.

However, the prior art solution also fails to meet the requirement (ii) above, since a method has to be invented for efficiently compute the path metrics for all the combinations.

Such computation technique for recursive computation for MLM detection is known in other prior art. In essence, virtually no multiplications are needed for MLM based on the technique, and only 3 additions per candidate are needed.

This addresses the requirement (ii), but for MLM detection only. Hence, the known prior art computation method cannot be applied to LTE-A as MLM has a prohibitive number of vectors to test (16777216 for N=4, M=64).

The focus of this disclosure is to develop a detector that inherits the requirements (i) and (iii) from known prior art methods, but extends it in such a way that the requirement (iv) is adequately addressed, while at the same time extending known prior art computation techniques so that the technique is no longer only applicable for full search, i.e., MLM, but also can be used for the detectors, thereby achieving also requirement (ii).

Hence, a general problem is to provide novel detector and detection scheme that meet the aforementioned requirements (i) - (iv) have to be searched for in order to provide efficient MIMO detection.

## SUMMARY

It is therefore an object to obviate at least some of the above mentioned disadvantages and to improve the performance in a wireless communication system.

This and other objects are achieved by the features of the appended independent claims. Further implementation forms are apparent from the dependent claims, the description and the figures.

According to a first aspect, a method is provided in a User Equipment (UE) for Multiple-Input and Multiple-Output (MIMO) detection of signals received from a radio network node, comprised in a wireless communication network. The method comprises receiving a signal of the radio network node. Also, the method in addition comprises establishing a list of hypotheses candidate vector. Further, the method also comprises computing path metrics (aka, Euclidean distances) of the established list of hypotheses candidate vector, and thereby computing Log-Likelihood Ratios (LLRs) utilising the computed path metrics for achieving MIMO detection, wherein the computed path metrics of the established list of hypotheses candidate vector is expressed as:

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m).$$

wherein $\gamma_k(x_n) \equiv -\mathrm{R}\{x_n^* z_k\} + |x_n|^2 \frac{G_{k,k}}{2}$, $\delta_{mn}(x,y) \cong \mathrm{R}\{x^* G_{m,m} y\}$,

wherein $\mathbf{G} = \mathbf{H}^H\mathbf{H}$ and $\mathbf{z} = \mathbf{H}^H\mathbf{y}$

wherein $\mathbf{H}$ is a effective channel matrix, wherein $\mathbf{y} = \mathbf{Hx} + \mathbf{w}$, wherein w is a complex white Gaussian noise vector, wherein $x_k$ is a candidate symbol of a k-th layer, wherein R{...} is a real part of {...}.

In a first possible implementation of the method according to the first aspect, the method further comprises computing Linear Minimum Mean Square Error (LMMSE) estimate of the transmitted modulation alphabet via the received signal.

In a second possible implementation of the method according to the first possible implementation of the method according to the first aspect, the computation of LMMSE is made on a complex- valued received signal.

In a third possible implementation of the method according to the first aspect, or any previous possible implementation thereof, the method further comprises performing soft parallel interference cancellation with MMSE of the received signal on a given number of iterations.

In a fourth possible implementation of the method according to the first aspect, or any previous possible implementation of the method according to the first aspect, the performance of soft parallel interference cancellation comprises MMSE filtering on a complex- valued received signal.

In a fifth possible implementation of the method according to the first aspect, or any previous possible implementation of the method according to the first aspect, further comprising calculating the most likely candidates per spatial layer independently for each layer.

In a sixth possible implementation of the method according to the fifth possible implementation of the method according to the first aspect, the establishment of the list of hypotheses candidate vector is based on possible combinations of the calculated most likely candidates per spatial layer.

In a seventh possible implementation not forming part of the invention of the method according to the first aspect, or any previous possible implementation of the method according to the first aspect, the method further comprises converting complex-valued received signal into real-valued; thereby obtaining four 2x2 real-valued groups (assuming 4x4 complex-valued MIMO detection problem) by utilising Subspace Marginalisation Interference Suppression (SUMIS) algorithm; and obtaining a set of most likely candidates for each 2x2 real-valued groups, after having a set of most likely candidates for each group, and forming a list of all possible hypotheses candidate vector based on the candidates found in 2x2 real-valued groups.

In an eighth possible implementation of the method according to the first aspect, or any previous possible implementation of the method according to the first aspect, in case of missing bits, the LLRs are utilised from the first stage processing, which is LMMSE/ MMSE-SPIC demodulation.

In a ninth possible implementation of the method according to the first aspect, or any previous possible implementation of the method according to the first aspect, knowledge about errors in channel estimation is utilised for computing path metrics of the hypotheses candidate vector.

In a tenth possible implementation of the method according to the first aspect, or any previous possible implementation of the method according to the first aspect, a candidate reduction technique is utilised in order to reduce the list of hypotheses candidate vector by pruning the most unlikely candidates' combinations forming the hypotheses.

In an eleventh possible implementation of the method according to the first aspect, or any previous possible implementation of the method according to the first aspect, the computed path metrics of the established list of hypotheses candidate vector is evaluated recursively over a tree structure.

In a twelfth possible implementation of the method according to the first aspect, or any previous possible implementation of the method according to the first aspect, the number of additions is reduced such that: a depth 4 matrix requires $2M_4\ M_3\ M_2\ M_1 + M_4\ M_2\ M_1 + M_4\ M_1$ real additions; a depth 3 matrix requires $2M_3\ M_2\ M_1 + M_3\ M_1$ real additions; and a depth 2 matrix requires $2M_2\ M_1$ real additions, wherein $M_k$ is a number of candidates for $x_k$..

In a thirteenth possible implementation of the method according to the first aspect, or any previous possible implementation of the method according to the first aspect, the wireless communication network is based on 3rd Generation Partnership Project Long Term Evolution (3GPP LTE) and the radio network node comprises an evolved NodeB (eNodeB).

In a second aspect, a UE is provided, configured for MIMO detection of signals received from a radio network node, comprised in a wireless communication network. The UE comprises a receiving circuit, configured for receiving signals from the radio network node. Also, the UE comprises a processing circuit, configured for establishing a list of hypotheses candidate vector, and also configured for computing path metrics of the established list of hypotheses candidate vector by computing LLR, utilising the computed path metrics for achieving MIMO detection, wherein the computed path metrics of the established list of hypotheses candidate vector is expressed as:

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m).$$

wherein $\gamma_k(x_n) \equiv -\mathrm{R}\{x_n^* z_k\} + |\,x_n\,|^2 \dfrac{\mathrm{G}_{k,k}}{2}$, $\delta_{mn}(x,y) \cong \mathrm{R}\{x^* \mathrm{G}_{m,m} y\}$,

wherein $\mathbf{G} = \mathbf{H}^H\mathbf{H}$ and $\mathbf{z} = \mathbf{H}^H\mathbf{y}$

wherein **H** is a effective channel matrix, wherein $\mathbf{y} = \mathbf{Hx} + \mathbf{w}$, wherein w is a complex white Gaussian noise vector, wherein $x_k$ is a candidate symbol of a k-th layer, wherein R{...} is a $M_1$ real part of {...}.

In a first possible implementation of the second aspect, the processing circuit may be further configured for LMMSE estimate of transmitted modulation alphabet via the received signal.

In a second possible implementation of the second aspect, or the previous possible implementation of the method according to the second aspect, the processing circuit is further configured for computing LMMSE on a complex-valued received signal.

In a third possible implementation of the second aspect, or any previous possible implementation of the second aspect, the processing circuit is further configured for performing soft parallel interference cancellation with MMSE of the received signal on a given number of iterations.

In a fourth possible implementation of the second aspect, or any previous possible implementation of the second aspect, the processing circuit is further configured for performing the soft parallel interference cancellation comprises MMSE filtering on a complex- valued received signal.

In a fifth possible implementation of the second aspect, or any previous possible implementation of the second aspect, the processing circuit is further configured for calculating the most likely candidates per spatial layer independently for each layer.

In a sixth possible implementation of the second aspect, or any previous possible implementation of the second aspect, the processing circuit is further configured for establishing the list of hypotheses candidate vector based on possible combinations of the calculated most likely candidates per spatial layer.

In a seventh possible implementation not forming part of the invention of the second aspect, or any previous possible implementation of the second aspect , the processing circuit is further configured for converting complex-valued received signal into real-valued; and thereby obtaining four 2x2 real-valued groups by utilising SUMIS algorithm; and

also configured for obtaining a set of most likely candidates for each 2x2 real-valued groups, after having a set of most likely candidates for each group, and forming a list of all possible hypotheses candidate vector based on the candidates found in 2x2 real-valued groups.

In an eighth possible implementation of the second aspect, or any previous possible implementation of the second aspect, the processing circuit is further configured for utilising the LLRs from the first stage processing.

In a ninth possible implementation of the second aspect, or any previous possible implementation of the second aspect, the processing circuit is further configured for computing LMMSE of the received signal by utilising knowledge about errors in channel estimation.

In a tenth possible implementation of the second aspect, or any previous possible implementation of the second aspect, the processing circuit is further configured for utilising a candidate reduction technique in order to reduce the number of candidates before calculating the most likely candidates per spatial layer independently for each layer.

In an eleventh possible implementation of the second aspect, or any previous possible implementation of the second aspect, the processing circuit is further configured for computing path metrics of the established list of hypotheses candidate vector, evaluated recursively over a tree structure.

In a twelfth possible implementation of the second aspect, or any previous possible implementation of the second aspect, the processing circuit is further configured for reducing the number of additions such that: a depth 4 matrix requires $2M_4 M_3 M_2 M_1 + M_4 M_2 M_1 + M_4 M_1$ real additions; a depth 3 matrix requires $2M_3 M_2 M_1 + M_3 M_1$ real additions; and a depth 2 matrix requires $2M_2 M_1 M_1$ real additions, wherein $M_k$ is a number of candidates for $x_k$..

In a thirteenth possible implementation of the second aspect, or any previous possible implementation of the second aspect, the wireless communication network is based on 3GPP LTE and wherein the radio network node comprises an eNodeB.

In a further implementation of the first aspect and/ or the second aspect, a computer program product is provided in a UE according to the second aspect, or any previous possible implementation of the second aspect, for performing a method according to the first aspect or any previous possible implementation of the first aspect, for MIMO detection of signals received from a radio network node, when the computer program product is loaded in a processing circuit of the UE.

Thanks to the herein described aspects, near-optimal and fixed-complexity MIMO detectors are provided, which obtain the LLRs by utilising the hypotheses candidate vectors in the reduced space and dimension. According to some disclosed detectors, knowledge about errors in the channel estimation can easily be employed in the detection part and thereby improve performance. Additionally, a candidate reduction technique is also disclosed to further reduce the cost of the complexity. The disclosed detectors have a constant/ fixed complexity. Further, the numbers of arithmetic operations are fairly low. Furthermore, the detectors are robust against all the modulation and code-rates, and the typical channel conditions. The performance of the disclosed detectors is comparable to full search of type Max-log-Maximum A-posteriori (MLM). Thus an improved performance within a wireless communication system is provided.

Other objects, advantages and novel features of the aspects of the invention will become apparent from the following detailed description.

## BRIEF DESCRIPTION OF THE DRAWINGS

Various embodiments are described in more detail with reference to attached drawings in which:

**Figure 1A** is a block diagram illustrating a wireless communication system according to some embodiments.

**Figure 1B** is a flow chart illustrating a method in a UE according to an embodiment.

**Figure 1C** is a flow chart illustrating a method in a UE according to an embodiment.

**Figure 1D** is a flow chart illustrating a method in a UE according to an embodiment.

**Figure 2** is a block diagram illustrating an embodiment of a MIMO detector in a UE.

**Figure 3** is a block diagram illustrating spectral efficiency according to some embodiments.

**Figure 4A** is a flow chart illustrating a MIMO detection scheme according to an embodiment.

**Figure 4B** is a block diagram illustrating normalised throughput according to some embodiments.

**Figure 4C** is a block diagram illustrating normalised throughput according to some embodiments.

**Figure 4D** is a block diagram illustrating normalised throughput according to some embodiments.

**Figure 5** is a flow chart illustrating a method in a UE according to an embodiment.

**Figure 6** is a block diagram illustrating a UE according to an embodiment.

## DETAILED DESCRIPTION

Embodiments of the invention described herein are defined as a UE and a method in the UE which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

**Figure 1A** is a schematic illustration over a wireless communication system **100** comprising a radio network node **110** communicating with a User Equipment (UE) **120,** which is served by the radio network node 110.

The wireless communication system 100 may at least partly be based on radio access technologies such as, e.g., 3GPP LTE, LTE-Advanced, Evolved Universal Terrestrial Radio Access Network (E-UTRAN), Universal Mobile Telecommunications System (UMTS), Global System for Mobile Communications (originally: Groupe Special Mobile) (GSM)/ Enhanced Data rate for GSM Evolution (GSM/EDGE), Wideband Code Division Multiple Access (WCDMA), Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), just to mention some few options. The expressions "wireless communication network", "wireless communication system" and/ or "cellular telecommunication system" may within the technological context of this disclosure sometimes be utilised interchangeably.

The wireless communication system 100 may be configured for carrier aggregation of a Frequency Division Duplex (FDD) carrier and at least one Time Division Duplex (TDD) carrier, according to different embodiments, in the downlink.

The purpose of the illustration in Figure 1A is to provide a simplified, general overview of the wireless communication system 100 and the involved methods and nodes, such as the radio network node 110 and UE 120 herein described, and the functionalities involved. The method and wireless communication system 100 will subsequently, as a non-limiting example, be described in a 3GPP LTE/ LTE-Advanced environment, but the embodiments of the disclosed method and wireless communication system 100 may be based on another access technology such as, e.g., any of the above already enumerated. Thus, although embodiments of the invention may be described based on, and using the lingo of, 3GPP LTE systems, it is by no means limited to 3GPP LTE.

The illustrated wireless communication system 100 comprises the radio network node 110, which may send radio signals to be received by the UE 120.

It is to be noted that the illustrated network setting of one radio network node 110 and one UE 120 in Figure 1A is to be regarded as a non-limiting example of an embodiment only. The wireless communication system 100 may comprise any other number and/ or combination of radio network nodes 110 and/ or UE 120. A plurality of UEs 120 and another configuration of radio network nodes 110 may thus be involved in some embodiments of the disclosed invention.

Thus whenever "one" or "a/ an" UE 120 and/ or radio network node 110 is referred to in the present context, a plurality of UEs 120 and/ or radio network nodes 110 may be involved, according to some embodiments.

The radio network node 110 may according to some embodiments be configured for downlink transmission and may be referred to, respectively, as e.g., a base station, NodeB, evolved Node Bs (eNB, or eNodeB), base transceiver station, Access Point Base Station, base station router, Radio Base Station (RBS), micro base station, pico base station, femto base station, Home eNodeB, sensor, beacon device, relay node, repeater or any other network node configured for communication with the UE 120 over a wireless interface, depending, e.g., of the radio access technology and/ or terminology used.

The UE 120 may correspondingly be represented by, e.g. a wireless communication terminal, a mobile cellular phone, a Personal Digital Assistant (PDA), a wireless platform, a mobile station, a tablet computer, a portable communication device, a laptop, a computer, a wireless terminal acting as a relay, a relay node, a mobile relay, a Customer Premises Equipment (CPE), a Fixed Wireless Access (FWA) nodes or any other kind of device configured to communicate

wirelessly with the radio network node 110, according to different embodiments and different vocabulary.

**Figure 1B** is a schematic illustration of an embodiment illustrating a near-optimal and efficient MIMO detection scheme. Thus, according to some embodiments, Minimum Mean Square Error (MMSE)-Soft Parallel Interference Cancellation (SPIC)-aided ReDuced space and dimension Maximum Likelihood Search (RD-MLS), may be comprised in the illustrated embodiment, which may comprise two stages:

**Stage 1**

In a first stage, wireless signals are received from a radio network node 110. Also, an LMMSE estimate of the transmitted modulation alphabet via received signal may be computed. Furthermore, soft parallel interference cancellation may be performed, with MMSE on the received signal for the given number of iterations. Thus soft-MMSE may be employed with parallel interference cancellation, or alternatively successive interference cancellation in different embodiments. The first stage detector may be referred to as either MMSE-SPIC or soft-MMSE-PIC, interchangeably.

The soft-bits for the PIC operation can either be utilised based on the MIMO demodulator itself or the channel decoder, or possibly the hybrid operation over the iterations.

Based on the output of the first stage, MMSE-SPIC, may obtain the most likely candidates per spatial layer independently, without any joint processing across spatial layers, in some embodiments.

A list of hypotheses candidate vector may be created based on all the possible combinations of the candidates obtained in the first stage.

**Stage 2**

In a second stage the path metrics of the selected list may be recursively computed. Thereby, the Log-Likelihood Ratios (LLRs) may be computed. In case of missing bits, i.e., when no counter hypothesis is available for the LLRs computation, the LLRs based on the MMSE-SPIC output may be utilised.

**Figure 1C** is a schematic illustration of an embodiment illustrating Real- valued- Subspace Marginalisation Interference Suppression (SUMIS)- aided RD-MLS is provided, which comprises three stages:

**Stage 1**

First stage employs receiving a wireless signals from the radio network node 110 and applying MMSE-SPIC, either complex- or real-valued. However, this step may be optional in some embodiments and may be used as a purification step to minimise or at least reduce the mutual stream interference such that better soft symbols estimate and corresponding symbols variance can be estimated. In some embodiments, no candidates per spatial layer may be selected in this stage herein. Thus, optionally, LMMSE may be performed on the complex-valued received signal in some embodiments and performing soft parallel interference cancellation with MMSE filtering on the complex-valued received signal.

**Stage 2**

In a second stage real-valued-SUMIS may be employed which comprises 3 sub-stages. Taking an example of 4x4 MIMO (complex-valued) or equivalently 8x8 MIMO real-valued, the real-valued 8x8 MIMO may be decomposed into 4 real-valued 2x2 MIMO groups. These 2x2 MIMO groups may be found by suitably and efficiently permuting the channel matrix column-wise which may maximise the capacity of such 2x2 groups/ pairs. Further, soft interference suppression may be performed for each group, and the most-likely hypotheses candidate may be obtained for each group, forming the list. Furthermore, LLRs may be computed of all the bits utilising 2x2 groups in some embodiments.

**Stage 3**

In a third stage, according to some embodiments, the path metrics of the selected list may be recursively computed, thereby computing the LLRs. In case of missing bits, i.e., when no counter hypothesis is available for the LLRs computation, the LLRs based on the real-valued-SUMIS output may be utilised.

**Figure 1D** is a schematic illustration of yet an embodiment illustrating Hierarchical RD-MLS, which comprises three stages:

**Stage 1**

In a first stage, wireless signals are received from a radio network node 110. Further, MMSE-SPIC may be

employed as in the previously described MMSE-SPIC-aided RD-MLS detector embodiment. Similar to the MMSE-SPIC-aided RD-MLS embodiment, the most likely candidates per spatial layer are obtained independently. Further, when the MIMO dimensions are more than 2, i.e., comprising more than 2 spatial layers, then the list of hypotheses candidate vector may not be created here; otherwise MMSE-SPIC-aided RD-MLS may be regarded as a special case of this Hierarchical RD-MLS for 2x2 MIMO groups.

**Stage 2**

In a possible second stage, 2x2 MIMO groups may be formed of large MIMO hierarchically, e.g., binary-tree structure, of the initial candidates obtained per layer from MMSE-SPIC, and searches the most likely set of candidates jointly in each group. In other words, all the possible hypothesis candidate vectors of each 2x2 MIMO groups may be formed, utilising the initial candidates obtained from the previous stage. The most likely candidate vector may be obtained in the reduced dimension. Such 2x2 grouping may be repeated until the last MIMO group is in the form of a 2x2 MIMO group.

**Stage 3**

In a possible third stage, the path metrics, and thereby the LLRs of the selected list may be computed. In case of missing bits i.e. when no counter hypothesis is available for the LLRs computation, the LLRs may be based on utilising the MMSE-SPIC output, in some embodiments.

**Figure 2** illustrates an embodiment of the detection scheme, based on MMSE-SPIC aided RD-MLS.

In some embodiments, a soft-MMSE-PIC may be employed instead of employing just an LMMSE detector, such that the total number of candidates can be reduced significantly, in particular for very high modulation alphabet.

Considering a single-cell scenario such that the serving radio network node 110 is equipped with $N_T$ transmission (Tx) antenna ports, and the desired UE 120 is equipped with $N_R$ reception (Rx) antennas. The spatial-multiplexing transmission scheme may employ $N_L \leq min\ \{N_T, N_R\}$ spatial layers. Under the assumption that the UE 120 is perfectly synchronised with the serving radio network node 110, the post- Fast Fourier Transform (FFT) received complex signal vector for the [k, $l$]- th Resource-Element (RE) carrying Physical Downlink Shared Channel (PDSCH) within a subframe reads:

$$\begin{aligned}\mathbf{y}[k,\ell] &= \mathbf{H}'[k,\ell]\ \mathbf{F}[k,\ell]\ \mathbf{x}[k,\ell] + \mathbf{w}[k,\ell]\\ &= \mathbf{H}[k,\ell]\mathbf{x}[k,\ell] \qquad + \mathbf{w}[k,\ell]\end{aligned} \qquad (2)$$

where $\mathbf{H}'[k,\ell] \in \mathbb{C}^{N_\mathrm{R} \times N_\mathrm{T}}$ corresponds to the channel matrix, $\mathbf{F}[k,\ell] \in \mathbb{C}^{N_\mathrm{T} \times N_\mathrm{L}}$ corresponds to the precoder matrix. $\mathbf{H}[k,\ell] = \mathbf{H}'[k,\ell]\ \mathbf{F}[k,\ell] \in \mathbb{C}^{N_\mathrm{R} \times N_\mathrm{L}}$ describes the effective channel matrix; $\mathbf{x}[k,\ell]=\mathrm{mapping}[b_1,b_2,...,b_{QN_L}] \in S^{N_L}$ denotes to the transmitted data symbol vector corresponding to the mapping of the coded-bits vector $[b_1,b_2,...,b_{QN_L}]$ whereby the mapped data symbol $\mathbf{x}[k,\ell]$ belongs to the finite-alphabet set $\Sigma$ corresponding to the $M$-QAM constellation ($M=2^Q$). The complex white Gaussian noise vector is denoted by $\mathbf{w}[k,\ell]$ with noise covariance matrix $N_0\ \mathbf{I}_{N_R}$. Hereafter, without loss of generality, the RE notation $[k,\ell]$ is dropped for brevity due to per RE MIMO detection processing. Hence, above-mentioned input-output relation can succinctly be denoted as:

$$\mathbf{y} = \mathbf{H}\mathbf{x} + \mathbf{w}. \qquad (3)$$

The optimal (symbol-wise) hard-MAP detection of the transmitted symbol vector **x** reads:

$$\hat{\mathbf{x}}_{\mathrm{MAP}} = \underset{\mathbf{x}\in\mathcal{S}^{N_{\mathrm{L}}}}{\operatorname{argmax}}\ \mathcal{P}\left(\mathbf{x}\,|\,\mathbf{y},\mathbf{H}\right) \tag{4}$$

$$= \underset{\mathbf{x}\in\mathcal{S}^{N_{\mathrm{L}}}}{\operatorname{argmax}}\ \underbrace{\mathcal{P}\left(\mathbf{y}|\mathbf{x},\mathbf{H}\right)}_{\hat{\mathbf{x}}_{\mathrm{ML}}}\underbrace{\mathcal{P}\left(\mathbf{x}\right)}_{\mathrm{prior}} \tag{5}$$

where,

$$\hat{\mathbf{x}}_{\mathrm{ML}} = \underset{\mathbf{x}\in\mathcal{S}^{N_{\mathrm{L}}}}{\mathbf{argmin}}\ \left\|\mathbf{y}-\mathbf{H}\mathbf{x}\right\|^{2}.$$

The innocent-looking integer-least squares in (5) is well-known as a Non-deterministic Polynomial-time (NP) hard problem (obviously, for higher modulation alphabet and large number of spatial layers). Hence, the numerous studies have been performed for a viable solution. Most of the disclosed solution embodiments can broadly be segregated into two classes, namely (a) linear detection, (b) non-linear/ quasi-ML detection.

The optimal (bit-wise) soft-MAP detection of the transmitted coded-bits reads:

$$L^{i}_{\mathrm{full-APP}} = \log\left(\frac{\sum\limits_{\mathbf{x}\in\mathcal{S}^{N_{\mathrm{L}}}_{b_i=1}}\left\{\exp\left(-\frac{\|\mathbf{y}-\mathbf{H}\mathbf{x}\|^{2}}{N_0}+\sum\limits_{j=1}^{QN_{\mathrm{L}}}b_j L^{j}_{A}\right)\right\}}{\sum\limits_{\mathbf{x}\in\mathcal{S}^{N_{\mathrm{L}}}_{b_i=0}}\left\{\exp\left(-\frac{\|\mathbf{y}-\mathbf{H}\mathbf{x}\|^{2}}{N_0}+\sum\limits_{j=1}^{QN_{L}}b_j L^{j}_{A}\right)\right\}}\right) \tag{6}$$

where, $L^j_A$ corresponds to the a-priori information of $j$-th bit within the bit vector $[b_1,b_2,....b_j,...,b_{QN_L}]$. The fundamental problem for the computation of the above-mentioned LLR (or log-APP/ log-MAP) may be NP-hard i.e., involving huge computational complexity. The naive/ brute-force approach would consider $2^{QN_L-1}$ sums for each numerator and denominator.

In order to reduce the complexity of the log-MAP approach, one resorts to the Max-Log-MAP (MLM) approach by replacing the summation with the maxima operator which can be approximated as:

$$\begin{aligned}L^{i}_{full-APP} \approx L^{i}_{full-MLM} &= \log\left(\frac{\max\limits_{\mathbf{x}\in\mathcal{S}^{N_{\mathrm{L}}}_{b_i=1}}\left\{\exp\left(-\frac{\|\mathbf{y}-\mathbf{H}\mathbf{x}\|^{2}}{N_0}+\sum\limits_{j=1}^{QN_{\mathrm{L}}}b_j L^{j}_{A}\right)\right\}}{\max\limits_{\mathbf{x}\in\mathcal{S}^{N_{\mathrm{L}}}_{b_i=0}}\left\{\exp\left(-\frac{\|\mathbf{y}-\mathbf{H}\mathbf{x}\|^{2}}{N_0}+\sum\limits_{j=1}^{QN_{L}}b_j L^{j}_{A}\right)\right\}}\right)\\ &= \max\limits_{\mathbf{x}\in\mathcal{S}^{N_{\mathrm{L}}}_{b_i=1}}\left\{-\frac{\|\mathbf{y}-\mathbf{H}\mathbf{x}\|^{2}}{N_0}+\sum\limits_{j=1}^{QN_{\mathrm{L}}}b_j L^{j}_{A}\right\}\\ &\quad-\max\limits_{\mathbf{x}\in\mathcal{S}^{N_{\mathrm{L}}}_{b_i=0}}\left\{-\frac{\|\mathbf{y}-\mathbf{H}\mathbf{x}\|^{2}}{N_0}+\sum\limits_{j=1}^{QN_{\mathrm{L}}}b_j L^{j}_{A}\right\}.\end{aligned} \tag{7}$$

Subsequently, some different embodiments of RD-MLS variants will be disclosed. Firstly, an embodiment comprising MMSE-SPIC aided RD-MLS is described followed by the efficient computation of the path metrics. Thereafter, two different alternative embodiments of the RD-MLS detectors may be described namely, real-valued-SUMIS aided and hierarchical RD-MLS.

In some embodiments, a soft-MMSE-PIC may be employed instead of employing just an LMMSE detector, such that the total number of candidates can be reduced significantly, in particular for very high modulation alphabet.

Further, in some embodiments, max-log-MAP based LLR computation which may outperform the log-MAP based LLR computation since the LLRs are over-estimated by log-MAP based computation in these quasi-ML approaches due to asymmetric/ unequal number of hypotheses for the LLR computation. Further, the linear combining of the LLRs output from the RD-MLS algorithm with the LLRs output from the SPIC may be utilised. Thus, some embodiments offer a good performance and complexity trade-off.

The illustrated embodiment in Figure 2 may comprise the subsequent actions:

Firstly, the MMSE-SPIC may be performed for the given number of iterations. Either the Turbo decoder output, or the demodulator output may be utilised in different embodiments. Further, alternatively, also both outputs may be utilised appropriately. However, the MMSE demodulator output may be utilised in order to reduce the latency.

(a) For each spatial layer $n = 1,..., N_L$ compute the soft-symbols $\breve{x}_n$ or the mean of the transmitted symbols, and the corresponding transmitted symbol variances $\sigma^2_{x_n}$ by utilising the APP-LLR output $\{L^{n,b}_{MMSE}\}$ from the MMSE demodulator as an a-priori. In the first iteration, the a-priori information is not available, i.e., $\{L^{n,b}_{MMSE}\} = 0, \forall n, b$, which implies that $\breve{x}_n = 0$ and $\sigma^2_{x_n} = 1$ , $n = 1,..., N_L$.

(b) For each layer $n = 1,..., N_L$ perform PIC utilising the soft-symbols,

$$\tilde{\mathbf{y}}_{(n)} = \mathbf{y} - \sum_{m=1\backslash n}^{N_L} \mathbf{h}_m \breve{x}_m. \tag{8}$$

(c) Apply the MMSE filter to each output of PIC $n = 1,...,N_L$ such that the $n$-th layer output reads:

$$\hat{x}_n^{\text{MMSE}} = \mathbf{g}_n^{\text{H}} \tilde{\mathbf{y}}_{(n)} \tag{9}$$

$$= \underbrace{\mathbf{g}_n^{\text{H}} \mathbf{h}_n}_{\beta_n} x_n + \underbrace{\mathbf{g}_n^{\text{H}} \left( \sum_{m=1\backslash n}^{N_L} \mathbf{h}_m \underbrace{(x_m - \breve{x}_m)}_{\tilde{x}_m} + w \right)}_{\tilde{w}_n} \tag{10}$$

where, the MMSE filter $\mathbf{g}_n^{\text{H}}$ is the $n$-th row vector of:

$$\mathbf{G}^{\text{H}} = \left( \mathbf{H}\mathbf{H}^{\text{H}} \mathbf{R}_{xx} + N_0 \mathbf{I}_{N_L} \right)^{-1} \mathbf{H}^{\text{H}}, \tag{11}$$

where the diagonal matrix $\mathbf{R}_{xx}$ comprises the variance of the transmitted symbols or the soft-symbols error $\sigma^2_{x_n}$.

Since an assumption may be that the output of the MMSE filter (10) is statistically independent and each output can be approximated by a Gaussian distribution, then the posterior probability of each candidate *symbol* $x_n$ for an $n$-th layer becomes:

$$\mathcal{P}\left(x_n \middle| \hat{x}_n^{\text{MMSE}}\right) = \frac{\mathcal{P}\left(x_n, \hat{x}_n^{\text{MMSE}}\right)}{\mathcal{P}\left(\hat{x}_n^{\text{MMSE}}\right)} \tag{12}$$

$$= \frac{\mathcal{P}\left(\hat{x}_n^{\text{MMSE}} \middle| x_n\right)\mathcal{P}\left(x_n\right)}{\sum_{x_m \in \mathcal{S}} \mathcal{P}\left(\hat{x}_n^{\text{MMSE}} \middle| x_m\right)\mathcal{P}\left(x_m\right)} \tag{13}$$

$$\propto \frac{1}{\left(\pi\sigma_{\tilde{w}_n}^2\right)} \exp\left(\frac{-\left|\hat{x}_n^{\text{MMSE}} - \beta_n x_n\right|^2}{\sigma_{\tilde{w}_n}^2}\right)\mathcal{P}\left(x_n\right), \tag{14}$$

where, $\sigma_{\tilde{w}_n}^2 = \beta_n\left(1 - \mathbf{R}_{xx}[n,n]\beta_n\right)$ describes the post-processing noise-plus-interference variance, and $\beta_n = \mathbf{g}_n^{\text{H}}\,\mathbf{h}_n$.

The post-processing Signal to Interference and Noise Ratio (SINR) per layer $\gamma[n]$ reads,

$$\underbrace{\gamma[n]}_{SINR_{MMSE-SPIC}} = \frac{\beta_n^2}{\sigma_{\tilde{w}_n}^2} \tag{15}$$

$$= \frac{\beta_n}{\left(1 - \mathbf{R}_{xx}[n,n]\beta_n\right)}. \tag{16}$$

Based on the posterior probabilities of each modulation-alphabet/candidate within the *M*-QAM constellation or equivalently the Euclidean distances of the candidates at each layer, a pre-defined number of candidates are chosen from the corresponding sorted list of the posterior probabilities or equivalently Euclidean distances in descending or ascending order, respectively. All the possible hypotheses $\mathcal{C}$ are created by the selected candidates each *n* layer, i.e., $\mathcal{C}_n$ such that the cardinality of the hypotheses $|\mathcal{C}| = |\mathcal{C}_1| \times |\mathcal{C}_2| \cdots |\mathcal{C}_{N_\text{L}}| = \prod_{n=1}^{N_\text{L}} \mathcal{M}_n$ are significantly lower than the full hypotheses $2^{QN_\text{L}}$.

While searching the set of most likely candidates per spatial layer, the spatial layers may be ordered in ascending order, based on the post-processing SINR in some embodiments. Thereby, a relatively large number of candidates to the weakest symbol (in the post-processing SINR sense) may be considered, while for the strongest symbol a smaller number of candidates may be considered in different embodiments. For example, under 64 QAM modulation alphabet, the number of candidates per ordered spatial layer can be represented in vector form $\mathcal{M} = [14,9,5,4]$, which implies that the total number of candidates may be $|\mathcal{C}| = 14 \times 9 \times 5 \times 4 = 2520$, which corresponds to roughly 0.015% of the full hypotheses. The weakest symbol layer thus may consider the first 14 likely candidates while the strongest layer considers the first 4 likely candidates in this non limiting example.

The LLRs may be computed based on the max-log-MAP principle such that the LLR of an *i*-th bit from the RD-MLS algorithm reads (omitting a-priori),

$$L^{i}_{\mathrm{RD-}MLS} = \min_{x\in\mathcal{C}\cap\mathsf{S}^{N_{\mathrm{L}}}_{b_i=0}} \left\{ \frac{\|\mathbf{y}-\mathbf{Hx}\|^2}{N_0} \right\} - \min_{x\in\mathcal{C}\cap\mathsf{S}^{N_{\mathrm{L}}}_{b_i=1}} \left\{ \frac{\|\mathbf{y}-\mathbf{Hx}\|^2}{N_0} \right\}. \quad (17)$$

The path-metrics, or equivalently called as Euclidean distances, are referred to the computation of $\|\mathbf{y} - \mathbf{Hx}\|^2$. It is worth to re-iterate that the LLR computation in the RD-MLS algorithm based on the max-log-MAP principle renders superior performance than based on the log-MAP principle due to the irregular/ unequal number of hypotheses candidate vector in the numerator and denominator, unless both numerator and denominator have the same number of hypotheses. The efficient computation of the path metrics of the hypotheses candidate vector for the log-likelihood ratios (LLRs) generation is detailed in the following section.

In case of the missing bit LLRs in the aforementioned RD-MLS algorithm, the appropriate LLRs from the SPIC output may be utilised. It means that the counter hypotheses are not available for the LLR computation. The LLR of an $i$-th bit from the SPIC output for a given $n$-th layer reads (omitting a-priori),

$$L^{i}_{\mathrm{MMSE-}SPIC} = \gamma[n]\left( \min_{x_n\in\mathsf{S}_{b_i=0}} \left\{ \left| \left( \hat{x}^{\mathrm{MMSE}}_n \big/ \beta_n \right) - x_n \right|^2 \right\} - \min_{x_n\in\mathsf{S}_{b_i=1}} \left\{ \left| \left( \hat{x}^{\mathrm{MMSE}}_n \big/ \beta_n \right) - x_n \right|^2 \right\} \right). \quad (18)$$

In some embodiments, a simple (weighted) linear combining of the LLRs rendered from both RD-MLS and MMSE-SPIC such that:

$$L^{i}_{\mathrm{d}emod} = \alpha L^{i}_{\mathrm{RD-}MLS} + (1-\alpha) L^{i}_{\mathrm{MMSE-}SPIC} \quad \forall i = 1,\ldots,QN_{\mathrm{L}}, \quad (19)$$

where, the value of $\alpha$ is obtained via simulations. As per numerical results, the typical value of $\alpha = 0.5$ works well under most of the test scenarios. However, in case of low channel coding rate, normally MMSE based solution can outperform the max-log-MAP based solution. So, in that case, smaller value of $\alpha$ can be considered, such as e.g., $\alpha = 0.25$, which implies that more weight is given to the MMSE based solution in some embodiments.

Furthermore, a candidate reduction method is provided, wherein one could also reduce the number of candidates vector $|\mathcal{C}|$ by deleting the most unlikely set of hypotheses candidates $\Omega$. To be specific, those hypotheses may be removed from the set $\mathcal{C} \backslash \Omega$ which are created based on the combination of the two and more least-likely candidates per spatial layer.

For example, consider 3 layers in 4-QAM set-up and the number of candidates vector to be selected is $\mathcal{M} = [3,2,2]$, i.e., $|\mathcal{C}| = 12$. The indexes of the modulation alphabet per spatial layer can be: $\mathcal{C}_1 = \{1,2,3\}$, $\mathcal{C}_2 = \{1,2\}$, and $\mathcal{C}_3 = \{1,2\}$. The set of the hypotheses candidates are:

$$\mathcal{C} = \{[1,1,1],[1,1,2],[1,2,1],[\mathbf{1,2,2}],[2,1,1],[2,1,2],[2,2,1],[\mathbf{2,2,2}],[3,1,1],[\mathbf{3,1,2}],[\mathbf{3,2,1}],[\mathbf{3,2,2}]\}.$$

Hence, all the combinations of the 2 and more least likely candidates of each spatial layer can be neglected from $\mathcal{C}$, where the set of the hypotheses that can be neglected is

$$\Omega = \{[\mathbf{1,2,2}],[\mathbf{2,2,2}],[\mathbf{3,1,2}],[\mathbf{3,2,1}],[\mathbf{3,2,2}]\}.$$

Notice that as per our numerical results, the candidate reduction method works well particularly in low spatial correlation.

The value $\mu(x) = \|\mathbf{y} - \mathbf{Hx}\|^2$ can be written as

$$\|\mathbf{y}-\mathbf{H}\mathbf{x}\|^2 \propto -2\mathcal{R}\{\mathbf{x}^H\mathbf{H}^H\mathbf{y}\}+\mathbf{x}^H\mathbf{H}^H\mathbf{H}\mathbf{x}$$
$$=\sum_{n=1}^{N_L}\left[-\mathcal{R}\{x_n^* z_n\}+|x_n|^2\frac{\mathcal{G}_{n,n}}{2}+\mathcal{R}\{x_n^*\sum_{m=1}^{n-1}\mathcal{G}_{n,m}x_m\}\right], \quad (20)$$

where, $\mathcal{G}=\mathbf{H}^H\mathbf{H}$ and **z = H**$^H$**y** has been defined. The metric $\mu(x)$ can then be evaluated in a recursive fashion over a tree structure. In the above summation, the index *n* has the meaning of "tree-depth". This is so since for each stage *n*, only the symbols $x_n,x_{n-1},...,x_1$ are involved in the computations. To better visualise this, it may be useful to make the following definition

$$\mu(x_L,x_{L-1},\ldots,x_1)\equiv\sum_{n=1}^{L}\left[-\mathcal{R}\{x_n^* z_n\}+|x_n|^2\frac{\mathcal{G}_{n,n}}{2}+\mathcal{R}\left\{x_n^*\sum_{m=1}^{n-1}\mathcal{G}_{n,m}x_m\right\}\right].$$

Then, the recursive formulation may be reached;

$$\mu(x_L,x_{L-1},\ldots,x_1)=\mu(x_{L-1},\ldots,x_1)-\mathcal{R}\{x_L^* z_L\}+|x_L|^2\frac{\mathcal{G}_{L,L}}{2}+\mathcal{R}\left\{x_L^*\sum_{m=1}^{L-1}\mathcal{G}_{L,m}x_m\right\}.$$

By making the additional definitions:

$$\gamma_k(x_n)\equiv-\mathcal{R}\{x_n^* z_k\}+|x_n|^2\frac{\mathcal{G}_{k,k}}{2},\quad \delta_{mn}(x,y)\cong\mathcal{R}\{x^*\mathcal{G}_{m,m}y\},$$

the recursive metric may be simplified as

$$\mu(x_L,x_{L-1},\ldots,x_1)=\mu(x_{L-1},\ldots,x_1)+\gamma_L(x_L)+\sum_{m=1}^{L-1}\delta_{Lm}(x_L,x_m).$$

In some embodiments, $N_L$=4 may be set and the complexity of evaluating all $|\mathcal{C}|=\prod_{n=1}^{N_L}\mathcal{M}_n$ metrics may be derived based on the recursive metric derived in the previous section. There are two steps, (i) a preprocessing step, and (ii) the recursive metric step. Surprisingly, all multiplications can be pushed into the relatively small preprocessing step.

In this document, the complexity to generate $\mathcal{G}$ and ***z*** are not further considered, since it may be assumed that these information is already available due to the LMMSE processing in the first step in some embodiments. An expression of this complexity is straightforward to obtain though. Keep in mind that all complexity numbers to be presented are omitting the generation of these two variables.

The preprocessing consists of evaluation and storing all values of $\gamma(x_n)$ and $\delta_{mn}(x,y)$. Due to the reduced number of candidates for each symbol $x_k$, the complexity of the preprocessing step can be maintained quite small.

There may be $\mathcal{M}_k$ candidates for $x_k$. Thus, $\mathcal{M}_k$ values $\gamma_k(x)$ may be computed. In order to compute $-\mathcal{R}\{x_n^* z_n\}$, 2 real-valued multiplications may be made and one real-valued addition. It may be assumed that all values of $|x_k|^2/2$ are available in a Look-Up-Table (LUT), then one table-look-up may be made and one real multiplication to compute $|x_k|^2\,\mathcal{G}_{k,k}/2$. Then, addition may be made by: $-\mathcal{R}\{x_n^* z_n\}$ and $|x_k|^2\,\mathcal{G}_{k,k}/2$ which costs another

real addition. Altogether, all values of $\gamma_k(x)$ can be computed and stored i memory via: $3\sum_{k=1}^{N_L}\mathcal{M}_k$ real multiplications, $2\sum_{k=1}^{N_L}\mathcal{M}_k$ real additions, and $\sum_{k=1}^{N_L}\mathcal{M}_k$ LUT operations.

Next a precomputation and storage of different possibilities for $\delta_{mn}(x,y)$ may be made. This may be performed for the 6 pairs $(m,n) \in \{(2,1), (3,1), (3,2),(4,1), (4,2), (4,3)\}$. In a non-limiting example, the pair (2,1) may be considered. The subsequent computation may be made:

$$\gamma_{21}(x,y) = \mathcal{R}\{x^* \mathcal{G}_{2,1} y\}, x \in \mathcal{X}_1, x \in \mathcal{X}_2.$$

In total, there are $\mathcal{M}_1\mathcal{M}_2$ $\gamma$-values to compute for the exemplary pair (2,1). Under the assumption that all combinations of $xy$ are stored in a LUT, each value may be computed via one 2D-table-lookup, 2 real multiplications, and one real addition. Hence: $2[\mathcal{M}_2\mathcal{M}_1 + \mathcal{M}_3\mathcal{M}_1 + \mathcal{M}_3\mathcal{M}_2 + \mathcal{M}_4\mathcal{M}_1 + \mathcal{M}_4\mathcal{M}_2 + \mathcal{M}_4\mathcal{M}_3]$ real multiplications, $[\mathcal{M}_2\mathcal{M}_1 + \mathcal{M}_3\mathcal{M}_1 + \mathcal{M}_3\mathcal{M}_2 + \mathcal{M}_4\mathcal{M}_1 + \mathcal{M}_4\mathcal{M}_2 + \mathcal{M}_4\mathcal{M}_3]$ real additions, and $[\mathcal{M}_2\mathcal{M}_1 + \mathcal{M}_3\mathcal{M}_1 + \mathcal{M}_3\mathcal{M}_2 + \mathcal{M}_4\mathcal{M}_1 + \mathcal{M}_4\mathcal{M}_2 + \mathcal{M}_4\mathcal{M}_3]$ 2D LUT operations.

For $N_L$=4, there may be four stages in the search tree.

**Depth 1.** In the first stage the $\mathcal{M}_1$ values of $\gamma_1(x_1)$, $x_1 \in \mathcal{X}_1$ may be computed. This does not require any additions or multiplications whatsoever, and $\mathcal{M}_1$ Memory Fetches (MF) may be sufficient.

**Depth 2.** At this depth, there may be $\mathcal{M}_1\mathcal{M}_2$ nodes, and each one has a metric according to:

$$\mu(x_2, x_1) = \mu(x_1) + \gamma_2(x_2) + \delta_{21}(x_2, x_1).$$

There are various ways to compute all $\mathcal{M}_1\mathcal{M}_2$ metrics. In some embodiments, they may be computed one by one independent from each other. Subsequently, another embodiment relating to a more sophisticated evaluation method for computing the $\mathcal{M}_1\mathcal{M}_2$ metrics will be presented and discussed. Since for each metric, there are 3 variables involved but only 2 of them needs to be fetched from memory, thus $2\mathcal{M}_1\mathcal{M}_2$ memory fetches may be required but only $2\mathcal{M}_1\mathcal{M}_2$ real additions, according to some embodiments.

**Depth 3.** At this depth, there are $\mathcal{M}_1\mathcal{M}_2\mathcal{M}_3$ nodes, and each one has a metric according to:

$$\mu(x_3, x_2, x_1) = \mu(x_2, x_1) + \gamma_3(x_3) + \delta_{31}(x_3, x_1) + \delta_{32}(x_3, x_2).$$

For each metric, there may be 4 variables involved, so there may be in total $3\mathcal{M}_1\mathcal{M}_2\mathcal{M}_3$ memory fetches and $3\mathcal{M}_1\mathcal{M}_2\mathcal{M}_3$ real additions in some embodiments.

**Depth 4.** At this depth, there may be $\mathcal{M}_1\mathcal{M}_2\mathcal{M}_3\mathcal{M}_4$ nodes, and each one has a metric according to:

$$\mu(x_4, x_3, x_2, x_1) = \mu(x_3, x_2, x_1) + \gamma_4(x_4) + \delta_{41}(x_4, x_1) + \delta_{42}(x_4, x_2) + \delta_{43}(x_4, x_3).$$

For each metric, there may be 5 variables involved, so that in total $4\mathcal{M}_1\mathcal{M}_2\mathcal{M}_3\mathcal{M}_4$ memory fetches and $4\mathcal{M}_1\mathcal{M}_2\mathcal{M}_3\mathcal{M}_4$ real additions may be made.

It may be noted that for the preprocessing step, the complexity may be independent of which order the symbols are processed in the following recursive step. But within the recursive step itself the order is important. This may be seen as $\mathcal{M}_4$ only impacts the complexity in the fourth step. The fourth step is fully symmetric with respect to the layer order, so it is beneficial to let the largest value of $\mathcal{M}_k$ enter only in the fourth step. Then, by induction, one can establish the general rule that the sequence $\mathcal{M}_1$, $\mathcal{M}_2$, ..., $\mathcal{M}_{NL}$ may be non-decreasing.

The total complexity of generating the $|\mathcal{C}| = \mathcal{M}_1\mathcal{M}_2\mathcal{M}_3\mathcal{M}_4$ metrics may comprise: $3\sum_{k=1}^{N_L}\mathcal{M}_k + 2\sum_{k=2}^{N_L}\mathcal{M}_k\sum_{\ell=1}^{k-1}\mathcal{M}_\ell$ real multiplications, $2\sum_{k=1}^{N_L}\mathcal{M}_k + \sum_{k=2}^{N_L}\mathcal{M}_k\sum_{\ell=1}^{k-1}\mathcal{M}_\ell + \sum_{n=2}^{N_L}n\prod_{\ell=1}^{n}\mathcal{M}_\ell$ real additions, $\sum_{n=1}^{N_L}n\prod_{\ell=1}^{n}\mathcal{M}_\ell$ Memory fetches, $\sum_{k=2}^{N_L}\mathcal{M}_k\sum_{\ell=1}^{k-1}\mathcal{M}_\ell$ 2D LUT operations, and $\sum_{k=1}^{N_L}\mathcal{M}_k$ LUT operations.

The difference between a Look Up Table (LUT) operation and a memory fetch, is that the LUT is identical from one Resourse Element (RE) to another RE, while a memory fetch is fetching a value computed for a given RE.

Exemplary total complexity may comprise an illuminating numerical example. The number of candidates $\{\mathcal{M}_1, \mathcal{M}_2, \mathcal{M}_3, \mathcal{M}_4\} = \{4,4,7,8\}$ may be assumed (notice that the first set of 4 candidates correspond to the strongest symbol while the last set of 8 candidates correspond to the weakest symbol). This is in total $|\mathcal{C}| = 896$ candidates. Plugging these values into the formulas of the previous section gives:

453 real multiplications,
4022 real additions,
5016 memory fetches,
192 2D LUT operations, and
23 LUT operations.

Remarkably, less real multiplications than there is metrics to evaluate are needed. This comes at the price of more additions and memory fetches.

As mentioned previously, the number of additions can be reduced in a straightforward fashion. Consider the previously discussed depth 4. The $|\mathcal{C}|$ sums may be formed:

$$\mu(x_4, x_3, x_2, x_1) = \mu(x_3, x_2, x_1) + \gamma_4(x_4) + \delta_{41}(x_4, x_1) + \delta_{42}(x_4, x_2) + \delta_{43}(x_4, x_3).$$

However, many of the above sums may only differ in a single variable, and consequently there may be room to reuse some partial sums in some embodiments. An efficient method may according to some embodiments comprise any, some or all of the subsequent actions:

1. Compute the $\mathcal{M}_4, \mathcal{M}_{1\,1}$ sums

$$\gamma_4(x_4) + \delta_{41}(x_4, x_1),$$

and denote each such sum by $\beta(x_4,x_1)$. This may require $\mathcal{M}_4, \mathcal{M}_1$ real additions.

2. For each value of $\beta(x_4,x_1)$, addition may be made by $\delta_{42}(x_4,x_2)$ which produces $\mathcal{M}_4\mathcal{M}_2\mathcal{M}_1$ terms $\beta(x_4,x_2,x_1)$. This may require $\mathcal{M}_4\mathcal{M}_2\mathcal{M}_1$ additions.

3. For each value of β($x_4$,$x_2$,$x_1$), addition may be made by $\delta_{43}$($x_4$,$x_3$) which produces $\mathcal{M}_4\mathcal{M}_3\mathcal{M}_2\mathcal{M}_1$ terms β($x_4$,$x_3$,$x_2$,$x_1$). This may require $\mathcal{M}_4\mathcal{M}_3\mathcal{M}_2\mathcal{M}_1$ additions.

4. Finally, addition may be made by β($x_4$,$x_3$,$x_2$,$x_1$) and μ($x_3$,$x_2$,$x_1$) which may require another $\mathcal{M}_4\mathcal{M}_3\mathcal{M}_2\mathcal{M}_1$ additions. In total, it may be required $2\mathcal{M}_4\mathcal{M}_3\mathcal{M}_2\mathcal{M}_1 + \mathcal{M}_4\mathcal{M}_2\mathcal{M}_1 + \mathcal{M}_4\mathcal{M}_1$ real additions at depth 4 instead of the $4\mathcal{M}_4\mathcal{M}_3\mathcal{M}_2\mathcal{M}_1$ required according to the previously discussed naive approach. Similarily at depth 3 and 2, it may be required $2\mathcal{M}_3\mathcal{M}_2\mathcal{M}_1 + \mathcal{M}_3\mathcal{M}_1$ and $2\mathcal{M}_2\mathcal{M}_1$ real additions, respectively.

By generalising the expressions from the previous section, it may be obtained: $$\underbrace{2\sum_{k=1}^{N_L}\mathcal{M}_k + \sum_{k=2}^{N_L}\mathcal{M}_k\sum_{\ell=1}^{k-1}\mathcal{M}_\ell}_{Pre-processing} + \sum_{\ell=3}^{N_L}\mathcal{M}_\ell\sum_{k=1}^{\ell-2}\prod_{n=1}^{k}\mathcal{M}_k + 2\sum_{k=2}^{N_L}\prod_{\ell=1}^{k}\mathcal{M}_\ell$$ real additions. Turning back to the case wherein $N_L$ = 4 and plug in $\{\mathcal{M}_1,\mathcal{M}_2,\mathcal{M}_3,\mathcal{M}_4\} = \{4,4,7,8\}$, 2474 real additions may be achieved. Using $\{\mathcal{M}_1,\mathcal{M}_2,\mathcal{M}_3,\mathcal{M}_4\} = \{3,4,5,6\}$, 1124 real additions (and 292 real multiplications) may be made.

In reality, the channel estimation may not be perfect and thus, it may introduce a channel estimation error:

$$\hat{H} = H + E.$$

It may be assumed that the channel estimation error is with zero mean, uncorrelated with both the transmitted data, and the channel. Furthermore:

$$\mathbb{E}\{\mathbf{E}_{i,j}^2(H_{i,j})\} = \sigma_{E_{i,j}}^2,$$

It may also be assumed that all $\sigma_{E_{i,j}}^2$ in each layer k are the same, $\sigma_{E_{i,j}}^2 = \sigma_E^2$. In order to consider the impact of channel estimation error, the following path-metric term in the LLR computation: $\frac{\|\mathbf{y} - \mathbf{Hx}\|^2}{N_0}$ may be modified, i.e.,

$$\sum_{k=1}^{N}\log\left(N_0 + \sum_{n=1}^{M}\sigma_{E_k}^2|\hat{x}_n|^2\right) + \frac{\|\mathbf{y} - \mathbf{Hx}\|^2}{N_0 + \sum_{n=1}^{M}\sigma_{E_k}^2|\hat{x}_n|^2}$$

$\hat{x}_n$ is the estimated transmitted or soft symbol n, which may be obtained, once an iterative receiver (or soft-MMSE-SPIC) is employed.

The second detector embodiment will subsequently be described, wherein the candidates are generated from the so-called real-SUMIS algorithm; in the sequel the real-SUMIS will be described in detail, unlike in the previous detector embodiment wherein the candidates may be generated utilising the output of the MMSE-SPIC. Furthermore, the efficient computation of the path metrics required for the LLR computation is described.

The previously described channel model may be considered, i.e.,

$$\mathbf{y} = \mathbf{Hx} + \mathbf{w},$$

where **H** is a *N*x*N* matrix and **x** is a vector comprising independent, unit energy, uniformly distributed *M*-QAM symbols. A fundamental assumption is that the bit-mapping of the *M*-QAM constellation is such that the constellaion is separable. In simple words, this means that $\log_2(M)/2$ bits are controlling the I-part and another $\log_2(M)/2$ bits control the Q-part of the constellation. If this assumption is not fulfilled, the results of this report do not apply; in particular, Phase-Shift Keying (PSK) constellations are not separable except for the Quadrature-PSK (QPSK) constellation. The aforementioned system model can be equivalently expressed in the real domain through the transformations:

$$\mathbf{H} = \begin{bmatrix} \mathcal{R}\{\mathbf{H}\} & -\mathcal{I}\{\mathbf{H}\} \\ \mathcal{I}\{\mathbf{H}\} & \mathcal{R}\{\mathbf{H}\} \end{bmatrix}$$

for matrices, and

$$\mathbf{x} = \begin{bmatrix} \mathcal{R}\{\mathbf{x}\} \\ \mathcal{I}\{\mathbf{x}\} \end{bmatrix}$$

for vectors. No notational difference between real-valued and complex-valued quantities may be made in some embodiments, as the context around the discussion clarifies the relevant domain. In the real representation, a 2*N*x2*N* signalling model may comprise:

$$\mathbf{y} = \mathbf{Hx} + \mathbf{w}.$$

If MMSE detection or optimal detection (MAP) is desired, there may be none, little or neglectible gain of using the real-valued model instead of complex-valued. For example, consider MMSE detection in the complex-valued model. After multiplication of **y** with the Wiener filter $\mathbf{H}^*(\mathbf{HH}^* + N_0\mathbf{I})^{-1}$, the following model may be achieved:

$$r_k = \alpha_k x_k + \eta_k, \quad 1 \le k \le N,$$

where $\alpha_k$ are real-valued and $\eta_k$ accounts for both noise and residual interference. Similarily, if MMSE processing is performed in the real-valued model, the Wiener filter may be $\mathbf{W} = 0.5\mathbf{H}^*(0.5\mathbf{HH}^* + 0.5N_0\mathbf{I})^{-1}$, and the model after filtering may be:

$$r_{2k+\ell} = \alpha_k x_{2k+\ell} + \eta_{2k+\ell}, \quad 1 \le k \le N, 1 \le \ell \le 2$$

which coincides with the model for the complex-valued MMSE case.

However, for other reduced complexity detectors there may be notable differences between the real and the complex models. The SUMIS detector may compare its operations in the real model with the complex model in some embodiments. The operations of the SUMIS technique can be summarised by the following steps according to some embodiments (no matter if a real or complex model is assumed); Group the symbols (*x*) in groups of *K* symbols. Symbols within each group will be jointly processed. Further, for each group $\ell$, express the received signal as

$$\mathbf{y}_\ell = \mathbf{H}_\ell \mathbf{x}_\ell + \underbrace{\overline{\mathbf{H}}_\ell \overline{\mathbf{x}}_\ell + \mathbf{w}}_{\mathbf{w}_\ell} = \mathbf{H}_\ell \mathbf{x}_\ell + \mathbf{w}_\ell,$$

where $\mathbf{x}_\ell$ is a vector with the symbols in group $\ell$, $\mathbf{H}_\ell$ is the columns of **H** corresponding to group $\ell$, $\mathbf{x}_\ell$ is all symbols in **x** except those in group $\ell$, and $\mathbf{H}_\ell$ are the columns in **H** corresponding to $\mathbf{x}_\ell$. The interference+noise term may be distributed according to $\mathbf{w}_\ell \sim \mathcal{CN}(0, \overline{\mathbf{H}}_\ell \overline{\mathbf{H}}_\ell^H + N_0\mathbf{I})$.

Further, a Cholesky factorisation of the colour of $\mathbf{w}_\ell$: $\mathbf{L}^H\mathbf{L} = \overline{\mathbf{H}}_\ell \overline{\mathbf{H}}_\ell^H + N_0\mathbf{I}$ may be performed. Next, use **L** to whiten the noise+interference

$$\mathbf{r}_\ell \equiv \mathbf{L}^{-H}\mathbf{y}_\ell = \mathbf{T}_\ell\mathbf{x}_\ell + \widehat{\mathbf{w}}_\ell,$$

where $\widehat{\mathbf{w}}_\ell \sim \mathcal{CN}(0,\mathbf{I})$, and $\mathbf{T}_\ell \triangleq \mathbf{L}^{-H}\mathbf{H}_\ell$.

Also, QR-factorisation $\mathbf{Q}_\ell\mathbf{R}_\ell = \mathbf{T}_\ell$ may be performed, $\mathbf{r}_\ell$ may be multiplied with $\mathbf{Q}_\ell^H$ and the first $K$ components of the result may be taken. This equals

$$\left[\mathbf{Q}_\ell^H\mathbf{r}_\ell\right]_{[1:K]} = \widetilde{\mathbf{R}}_\ell\mathbf{x}_\ell + \mathbf{z}_\ell,$$

where $\mathbf{z}_\ell \sim \mathcal{CN}(0,\mathbf{I}_K)$ is white unit-variance noise and $\tilde{\mathbf{R}}_\ell$ is the first $K$ rows of $\mathbf{R}_\ell$.

Based on the model in the last step, MAP, max-log-MAP, or some other technique may be performed, for group $\ell$ independently from other groups.

In the above scheme, it is irrelevant whether the underlying channel **H** is complex- or real-valued; the operations of the SUMIS algorithm remain the same. However, the complexity and the choices for the group size $K$ changes. Consider first the complex case and suppose that $N$ = 6. When $K$ = 1 a standard MMSE receiver is obtained. The complexity of the subsequent MAP/ max-log-MAP step becomes $2\times\sqrt{M}$ (since I and Q can be separated). The next possible $K$ is 2. This implies that there are three groups to detect. For each group it is no longer possible to separate I and Q, so that the complexity becomes $3 \times M^2$ . Another setting may be $K$ = 3, so that 2 groups are achieved, and a total complexity of $2 \times M^3$.

Let us now move on to the real-valued case. With $N$ = 6, the dimension of the matrix **H** become 12x12. The cardinality of the constellation may be $\sqrt{M}$ . The setting may be made such that $K$ = 1 -- but this is equivalent to MMSE detection and will give the same results as setting $K$ = 1 in the complex case. Now set $K$ = 2; this gives 6 groups, a complexity per group of $M$ and, hence, a total complexity of 6$M$. This option may not be available with the complex model. In fact, the "resolution" may be refined even further and set $K$ = 3. This gives 4 groups, and a total complexity of $4\times(\sqrt{M})^3$ . Further considerations may be made with $K$ = 4 and $K$ = 6, but $K$ = 5 may not give a constant group size since 12/ 5 is not an integer.

The cases $K$ = 4 and $K$ = 6 are especially interesting as they are directly comparable to the cases of having $K$ = 2 and $K$ = 3 in the complex case. A possible question may here be to ask whether $K$ = 2 in the complex case is *equivalent* to setting $K$ = 4 in the real case. As will be subsequently discussed, the answer to this question may be: "No, it is better to set $K$ = 4 in the real valued model". The difference between the real and the complex model lies in the freedom of selecting the groups to be jointly processed.

An illuminating example will be disclosed, where $N$ = 4 and a complex $K$ = 2. The first step of SUMIS would be to group the 4 columns of **H** 2-by-2 according to some such embodiments. Since the order of the objects within each group may be irrelevant, this can be done in three different ways, namely ([1,2], [3,4]; [1,3], [2,4]; [1,4], [2,3]). In the real-valued model, there may be 8 objects and these may be grouped in two groups of 4 objects each. It can be verified that there are 35 (=8!/2/4!/4!) such groupings possible, so that the freedom to pick the optimal grouping is higher. In fact, the model may comprise the complex model as a special case. Further the columns of the real-valued **H** may be denoted by $[R_1,...,R_N,I_1,...,I_N]$. Then, in the complex model, one may put $R_k$ in the same group as $I_k$. Hence, the complex model can be seen as the real model with the three different groupings:

$$([R_1,I_1,R_2,I_2],[R_3,I_3,R_4,I_4];[R_1,I_1,R_3,I_3],[R_2,I_2,R_4,I_4];[R_1,I_1,R_4,I_4],[R_2,I_2,R_3,I_3]).$$

In the real model, it may be allowed to separate $R_k$ and $I_k$ into different gropus and this may in general be beneficial.

A further example of 4x4 MIMO will subsequently be discussed, i.e., $N$ = 4. In **Table 1** it is shown that the different choices that are available for the group size, the resulting detection complexity and the number of permutations of the columns for the real SUMIS. Note that the group size $K$ = 3 is not available since 8/ 3 is not an integer so that it will result in "2 groups of 3 symbols, and 1 with 2 symbols". In **Table 2** the corresponding numbers for the complex

version of the SUMIS algorithm is given. It may be noted that the design choices are now less than for the real version, and some complexity levels are not present. The last row of each table corresponds to full complexity detection, while the first row is the standard MMSE receiver. As a final comment, it may be mentioned that all detectors in Table 2 are comprised in Table 1 as special cases.

**Table 1**

| $K$ | Det.complexity | Number of permutations |
|---|---|---|
| 1 | $8\mathcal{O}(\sqrt{M})$ | 1 |
| 2 | $4\mathcal{O}(M)$ | 105 |
| 3 | N.A. | N.A. |
| 4 | $2\mathcal{O}(M^2)$ | 70 |
| 8 | $\mathcal{O}(M^4)$ | 1 |

**Table 2**

| $K$ | Det.complexity | Number of permutations |
|---|---|---|
| 1 | $8\mathcal{O}(\sqrt{M})$ | 1 |
| 2 | $2\mathcal{O}(M^2)$ | 3 |
| 3 | N.A. | N.A. |
| 4 | $\mathcal{O}(M^4)$ | 1 |

The step-by-step recipe of the SUMIS algorithm can be written in a more compact form according to some embodiments. The full details may be omitted, with the remark that one merely follows the construction outlined in an alternative embodiment comprising an antenna-variant memory. Subsequently the description will be concentrated on the case $N = 4$ and $K = 2$ in the real model. It can be verified that there are 105 (=8!/$2^4$ /4!) possible permutations and the task may be to find the optimal one, or at least achieve some improvement. Please note that in the corresponding complex case, there may be no freedom what so ever, as a complex $K = 1$ corresponds to normal MMSE (with slightly lower complexity though). Before finding the optimal permutation, an appropriate cost function may be defined. The achievable rate of the detector may be taken. Let **P** be a permutation matrix that permutes the columns in **H** so that the first two columns of **HP** is group 1, columns 3-4 is group 2, etc. Then, define

$$\mathbf{B} = \mathbf{I} - \mathbf{P}^H \mathbf{H}^H (\mathbf{H}\mathbf{H}^H + N_0 \mathbf{I})^{-1} \mathbf{H}\mathbf{P}.$$

Further, let $\mathbf{B}_k$ be the 2x2 matrix (in general $K$x$K$) sub-matrix of **B** :

$$\widetilde{\mathbf{B}}^k = \mathbf{B}_{2k+1:2(k+1),2k+1:2(k+1)},$$

where "MATLAB" notation may be used for brevity. MATLAB (matrix laboratory) is a numerical computing environment and fourth-generation programming language. Then, the achievable rate of the SUMIS detector for this particular grouping is

$$f(\mathbf{P}) = \sum_{k=1}^{4} \log\left(\frac{1}{c_k}\right) + \sum_{k=1}^{4} \log\left(\frac{1}{\widetilde{c}_k}\right),$$

where

$$c_k = \widetilde{B}_{11}^k - \frac{\widetilde{B}_{12}^k \widetilde{B}_{21}^k}{\widetilde{B}_{22}^k},$$

and

$$c_k = \widetilde{B}_{22}^k.$$

The task may not be to maximise this expression over **P**. In principle, this can be carried out by exhaustive search over all 105 permutations, and computing the cost $f(\mathbf{P})$ for each one. This is ineffective, and two complexity reductions to find a permutation may be considered, that may be close to optimal.

**Low compleixty evaluation of** $f(\mathbf{P})$

It may be interesting to discover the **P** that optimises $f(\mathbf{P})$, however, it is not interesting to compute the function value $f(\mathbf{P})$ itself. Therefore, all constants may be removed from $f(\mathbf{P})$ with no loss. Thus:

$$\begin{aligned} \operatorname{argmax} f(\mathbf{P}) &= \operatorname{argmin} -f(\mathbf{P}) \\ &= \operatorname{argmin} \sum_{k=1}^{4} \log(c_k) + \sum_{k=1}^{4} \log(\widetilde{c}_k) \\ &= \operatorname{argmin} \sum_{k=1}^{4} \log\left(\widetilde{B}_{11}^k - \frac{\widetilde{B}_{12}^k \widetilde{B}_{21}^k}{\widetilde{B}_{22}^k}\right) + \sum_{k=1}^{4} \log\left(\widetilde{B}_{22}^k\right) \\ &= \operatorname{argmin} \sum_{k=1}^{4} \log\left(\det(\widetilde{\mathbf{B}}^k)\right). \end{aligned}$$

Hence, for each permutation, four 2x2 determinants may be evaluated.

By experiments it may have been observed that the permutation that maximises **P** very often has rich structure. The number of permutations that has the structure to be stated shortly is only 12 out of the 105. However, by experiments it can be verified that the optimal permutation does not always have the structure, which means that it lies outside the 12 permutations in some cases. Hence, choosing the permutation among the 12 instead of the 105 will not be optimal, but it does lower complexity. As shall be seen later from a numerical example, the 12 permutations perform so well that the restriction to this subset is sufficient for all practical purposes.

The observed structure thus becomes:

> When $I_i$ is grouped with $R_j$, then $R_i$ is grouped with $I_j$. When $I_i$ is grouped with $I_j$, then $R_i$ is grouped with $R_j$ and vica versa. $I_i$ is never grouped with $R_i$. It can be shown that the number of permutations with these properties is only 12, and the set $\mathcal{P}_{12}$ may be defined to be the set of the permutations that have such properties. The set of all 105 permutations may be denoted by $\mathcal{P}_{105}$. Likewise, the set of permutations that results in the standard complex-valued MMSE receiver may be denoted by $\mathcal{P}_{\mathbb{C}}$. In principle, $\mathcal{P}_{\mathbb{C}}$ contain a single element, namely $([R_1,I_1],[R_2,I_2],[R_3,I_3][R_4,I_4])$.

Although $\mathcal{P}_{12}$ is not optimal, the following result may be proven (the proof is omitted).

**Lemma 1:1** *The permutation* **P** *that maximises* $f(\mathbf{P})$ *is either such that there is exactly one* $R_i$ *that is paired with* $I_i$, *or such that there is no such* $R_i$ *and then the optimal permutation lies within the subset* $\mathcal{P}_{12}$.

What is the reason for the properties that makes the permutations in $\mathcal{P}_{12}$ to be so good? The columns that are grouped together may be treated jointly. When the inner product of two columns is 0, then there is no gain in grouping them as there is no dependencies between them to exploit in the joint processing; this is exactly the case for all permu-

tations in $\mathcal{P}_{\mathbb{C}}$ so they may not be expected to perform very well. With this observation in mind, now consider $R_i$ and $I_i$. For these two columns it is indeed the case that $R_i^{\mathrm{T}} I_i = 0$, so that there is nothing to harvest in joint treatment of them. This explains property 3. Properties 1-2 may be intuitively explained as follows. The shared properties of $I_i$ and $R_j$ are exactly the same as those between $I_i$ and $R_j$. Therefore, if it is good to pair $R_i$ and $I_j$, meaning that the corresponding det($\tilde{\mathbf{B}}^k$) is small, then the det($\tilde{\mathbf{B}}^k$) corresponding to $I_i$ and $R_j$ has exactly the same value. The net effect of property 1 and 2 is that although there will be four groups, there will only be two different effective channels $\tilde{\mathbf{R}}_\ell$.

This last statement can be used to further reduce the complexity of finding the best permutation. There may be 12 permutations to exhaust, but for each one, only two determinants may have to be evaluated since the other two have identical values. At this point there are 24 determinants to compute, but they will be reduced to only 12. Consider the permutation:

$$A \equiv ([R_1, R_2],[I_1, I_2];[R_3, R_4],[I_3, I_4])$$

which satisfies properties 1-3 above. Thus $\tilde{\mathbf{R}}_1 = \tilde{\mathbf{R}}_2$ and $\tilde{\mathbf{R}}_3 = \tilde{\mathbf{R}}_3$. Now consider another permutation $B$ also satisfying the properties 1-3:

$$B \equiv ([R_1, R_2],[I_1, I_2];[R_3, I_4],[I_3, R_4]).$$

But for permutation $B$, $\tilde{\mathbf{R}}_1$ equals $\tilde{\mathbf{R}}_1$ for the previous permutation $A$, and there is no need to evaluate it again. Going through all the 12 permutations, it may be observed that half of the computations can be shared. The total complexity of establishing the optimal permutation is therefore 12 evaluations of 2x2 MIMO matrices.

Subsequently will a numerical example of the achievable rates for real SUMIS be illustrated. Consider 4x4 MIMO, with IID complex Gaussian entries. Two tests may be performed: (i) find the truly best permutation within $\mathcal{P}_{105}$ for every channel, (ii) find the best permutation within $\mathcal{P}_{12}$. For comparison, the performance of the MMSE receiver, which is equivalent to using the permutation $\mathcal{P}_{\mathbb{C}}$ and the channel capacity is also illustrated. In all cases, the results may be averaged over 1000 independent channels. As can be seen, the permutations in $\mathcal{P}_{12}$ are virtually lossless - but there is a very small loss to the permutations in $\mathcal{P}_{105}$.

**Figure 3** discloses the achievable rates of 4x4 MIMO with real-SUMIS with $K$ = 2. The uppermost curve is the capacity of the channel (without waterfilling), the bottom curve is the MMSE receiver, i.e., complex SUMIS with $K$ = 1. The two almost overlapped curves are the SUMIS algorithm with the optimal permutation taken from $\mathcal{P}_{12}$ and $\mathcal{P}_{105}$, respectively.

As previously mentioned, the real SUMIS may be utilised to generate the list of candidates and thereby the generated list of candidates (hypotheses) is used for the LLR generation.

Generating candidate vectors with the real SUMIS may start by establishing the optimal grouping/ permutation according to the previous section. For the optimal grouping, the SUMIS algorithm may be computed according to previous discussions. For each group $\ell$, compute the metrics

$$\mu(\mathbf{x}_\ell) = \left\| [\mathbf{Q}_\ell \mathbf{r}_\ell]_{[1:K]} - \widetilde{\mathbf{R}}_\ell \mathbf{x}_\ell \right\|^2$$

for all $\sqrt{M}^K$ possible vectors $\mathbf{x}_\ell$. Then, output the $M_\ell$ vectors $\mathbf{x}_\ell^1, \ldots, \mathbf{x}_\ell^{M_k}$ with smallest $\mu(\cdot)$ as possible candidates for group $\ell$.

The hardware logics for the real SUMIS may be slightly different from that of the complex-valued SUMIS. In principle it would be possible to go back into the complex domain and compute the metrics for all the $\Pi\mathcal{M}_k$ vectors, but that may destroy the nice structure of the real SUMIS hardware as there would be no structure in the vectors that would be known in advance. Therefore, a new hardware structure may be developed for this case. The very same search

tree may be utilised, but instead of processing one complex layer per depth, one group of 2 columns (the embodiment illustrated in this entire section may be applicable for the real-valued case of $N = 4$ and $K = 2$) per depth may be processed. This means that after the LLRs have been found, a de-permutation of the LLRs may be done.

Exactly the same search tree as in the complex case may be reused with no modifications, the hardware is fixed and is always performing the same operations according to some embodiments. However, the preprocessing step may be changed (computing $\gamma(\cdot)$ and $\delta(\cdot,\cdot)$) and the new complexity may be about twice that of the complex case.

Evaluation may be made of the metric:

$$\mu(\mathbf{x}_1,\mathbf{x}_2,\mathbf{x}_3,\mathbf{x}_4) = \left\|\mathbf{y} - \mathbf{HP}[(\mathbf{x}_1,\mathbf{x}_2,\mathbf{x}_3,\mathbf{x}_4)]^{\mathrm{T}}\right\|^2,$$

where **P** is the optimal permution matrix and there are $\mathcal{M}_k$ choices for the 2x1 vector $\mathbf{x}_k$. Similar to the complex case, this may be rewritten:

$$\mu(\mathbf{x}_1,\mathbf{x}_2,\mathbf{x}_3,\mathbf{x}_4) \propto -2\mathbf{x}_{\mathrm{Bl}}^{\mathrm{T}}\mathbf{H}_{\mathrm{Bl}}^{\mathrm{T}}\mathbf{y}_{\mathrm{Bl}} + \mathbf{x}_{\mathrm{Bl}}^{\mathrm{T}}\mathbf{G}_{\mathrm{Bl}}\mathbf{x}_{\mathrm{Bl}},$$

where:

$$\mathbf{x}_{\mathrm{Bl}} = [\mathbf{x}_1,\mathbf{x}_2,\mathbf{x}_3,\mathbf{x}_4]^{\mathrm{T}},$$

and $\mathbf{H}_{\mathrm{Bl}}$ is a 4x4 block-matrix version of **HP** where each block is a 2x2 matrix. The vector $\mathbf{y}_{\mathrm{Bl}}$ is a 4x1 block-vector version of **y** where each block is a 2x1 vector.

This metric may be expressed in a recursive format, exactly as for the complex case, as

$$\mu(\mathbf{x}_L,\mathbf{x}_{L-1},\ldots,\mathbf{x}_1) = \mu(\mathbf{x}_{L-1},\ldots,\mathbf{x}_1) + \gamma_L(\mathbf{x}_L) + \sum_{m=1}^{L-1}\delta_{Lm}(\mathbf{x}_L,\mathbf{x}_m),$$

wherein:

$$\gamma_i(\mathbf{x}_i) \equiv \mathbf{x}_i^{\mathrm{T}}\mathbf{z}_{\mathrm{Bl},i} - \mathbf{x}_i^{\mathrm{T}}\mathbf{G}_{\mathrm{Bl},ii}\mathbf{x}_i, \quad \mathbf{z}_{\mathrm{Bl}} \equiv \mathbf{H}_{\mathrm{Bl}}^{\mathrm{T}}\mathbf{y}_{\mathrm{Bl}},$$

and

$$\delta_{ij}(\mathbf{x}_i,\mathbf{x}_j) \equiv \mathbf{x}_i^{\mathrm{T}}\mathbf{G}_{\mathrm{Bl},ij}\mathbf{x}_j.$$

From these expressions, given the values of $\gamma(\cdot)$ and $\delta(\cdot,\cdot)$ the rest of the processing, i.e., adding up suitable combinations of them, is the same as for the complex case. Hence, the only thing that can be different is the complexity associated to generating $\gamma(\cdot)$ and $\delta(\cdot,\cdot)$. Consider first the generation of $\gamma(\mathbf{x}_i)$. It may be noted that the matrix $\mathbf{G}_{\mathrm{Bl}}$ and the vector $\mathbf{y}_{\mathrm{Bl}}$ are already available from a subsequent MMSE step, so that there is no cost of evaluating these, in some embodiments. Firstly, $\mathbf{x}_\mathbf{i}$ may be multiplied to $\mathbf{y}_{\mathrm{Bl},i}$ and this will cost 2 real multiplications and one real addition. Then $\mathbf{x}_i^{\mathrm{T}}\mathbf{G}_{\mathrm{Bl},ii}\mathbf{x}_i$ may be evaluated, which may be written as:

$$\mathbf{x}_i^{\mathrm{T}}\mathbf{G}_{\mathrm{Bl},ii}\mathbf{x}_i = \mathrm{Tr}\left(\mathbf{G}_{\mathrm{Bl},ii}\mathbf{x}_i\mathbf{x}_i^{\mathrm{T}}\right).$$

The matrix $\mathbf{G}_{\mathrm{Bl},ii}$ is symmetric; thus the trace above may be evaluated with 3 multiplications and 2 additions under the assumption that $\mathbf{x}_i\mathbf{x}_i^{\mathrm{T}}$ is available in a LUT. In total, 5 multiplications and 4 additions may be made per $\gamma(\cdot)$ value.

However, now consider δ(·,·). The expression $\mathbf{x}_i^{\mathrm{T}}\mathbf{G}_{\mathrm{Bl},ij}\mathbf{x}_j$ may be evaluated, which may be written as :

$$\mathbf{x}_i^{\mathrm{T}}\mathbf{G}_{\mathrm{Bl},ij}\mathbf{x}_j = \mathrm{Tr}\left(\mathbf{G}_{\mathrm{Bl},ij}\mathbf{x}_j\mathbf{x}_i^{\mathrm{T}}\right).$$

In the real case, there is no structure in the matrix $\mathbf{G}_{\mathrm{Bl},ij}$, while in the complex case there are:

$$\mathbf{G}_{\mathrm{Bl},ij} = \begin{bmatrix} a & -b \\ b & a \end{bmatrix},$$

for some real numbers *a*,*b*. In other words, the matrix $\mathbf{G}_{\mathrm{Bl},ij}$ would represent a complex number. In the real case, it may be assumed that $\mathbf{x}_j\mathbf{x}_i^{\mathrm{T}}$ is available through a LUT of size at most $M^2$ but acutally much smaller due to symmetries. Then, evaluation may be made of $\mathrm{Tr}\left(\mathbf{G}_{\mathrm{Bl},ij}\mathbf{x}_j\mathbf{x}_i^{\mathrm{T}}\right)$ through 4 real multiplications and 3 additions.

Summarising, the preprocessing step for RD-MLS with real-SUMIS has complexity:

Real multiplications: $5\sum_{k=1}^{N}\mathcal{M}_k + 4\sum_{k=2}^{N}\mathcal{M}_k\sum_{\ell=1}^{k-1}\mathcal{M}_\ell$

Real additions: $4\sum_{k=1}^{N}\mathcal{M}_k + 3\sum_{k=2}^{N}\mathcal{M}_k\sum_{\ell=1}^{k-1}\mathcal{M}_\ell$

As a final remark, it is noted that it is straightforward to incorporate also interference cancellation into the real SUMIS framework. There are two possible changes that may be done:

The signal $\mathbf{y}_\ell$ in the second bullet in the previously made SUMIS description, may thus in some embodiments be changed into

$$\tilde{\mathbf{y}}_\ell = \mathbf{y}_\ell - \overline{\mathbf{H}}_\ell \mathbb{E}\{\overline{\mathbf{s}}_\ell\},$$

where $\overline{\mathbf{s}}_\ell$ is the estimation of $\overline{\mathbf{x}}_\ell$ from previous steps. The colour of the interference may be:

$$\mathbf{w}_\ell \sim \mathcal{CN}(\mathbf{0}, \overline{\mathbf{H}}_\ell \Psi_\ell \overline{\mathbf{H}}_\ell^H + N_0\mathbf{I}),$$

where $\Psi_l$ is the residual variance of $\overline{\mathbf{x}}_\ell$.

Besides from these two changes, other operations related to RD-MLS based on real SUMIS remains the same.

**Figure 4A** illustrates the previously mentioned concept and steps of the hierarchical RD-MLS MIMO detector considering 4x4 MIMO set-up for simplicity.

The embodiment related to the hierarchical RD-MLS MIMO detector may be regarded as a hybrid of the two respective previously presented detectors. In particular, the first two detectors may render prohibitive complexity for very large MIMO systems, e.g., to support 8 layers in 8x8 (complex-valued) MIMO system. Hence, this Hierarchical RD-MLS MIMO detector embodiment can also cater very large MIMO systems.

The concept of the described detector is as following according to an embodiment, considering 8x8 MIMO system as an example:

Firstly decompose the large MIMO system, e.g., 8x8 into smaller MIMO systems, e.g., 4x4 (complex-valued) using the aforementioned SUMIS technique. Further, for each decomposed smaller MIMO system, generate a list of most likely candidates (hypotheses).

After obtaining a list of most likely candidates per smaller MIMO system, then form a new list of hypotheses for full large MIMO system by creating all the possible combinations of the hypotheses found for the smaller MIMO systems.

Last but not least, compute the LLRs, or soft-bits, by utilising the final list of candidates or hypotheses.

Herein, it is shown the simulations of the first two described detector embodiments under ideal and practical channel state information, and a comparison is made of their performance with other reference detectors.

Key simulation parameters for test case-1 are given in **Table 3.**

**Table 3**

| | |
|---|---|
| Cell Bandwidth | 1.4 MHz |
| Transmit EVM | 6% |
| MIMO Configuration ($N_R$ x $N_T$) | 4 x 4 |
| PDSCH Resource Allocation | 6 PRB-pair |
| Transmission Mode | 3 (Open-Loop Spatial Multiplexing - OLSM Rank-4) with no fallback mode to space-frequency block coding (SFBC). |
| Modulation and Code Rate | 64QAM 0.85 |
| Channel Model | ETU 70 Low |
| Channel and noise variance estimation | Ideal knowledge |
| HARQ | Enabled |
| Number of Subframes | 1000 |

The definitions of the legends utilised in **Figure 4B** are summarised in **Table 4.**

**Table 4**

| | |
|---|---|
| SPICnx RD MLS [$\mathcal{M}_1$, $\mathcal{M}_2$,$\mathcal{M}_3$,$\mathcal{M}_4$] | Corresponds to the first detector embodiment, namely, MMSE-SPIC aided RD-MLS with n SPIC iterations including the initial iteration without soft data. The number of candidates for the ascending ordered spatial layers are given by [$\mathcal{M}_1$, $\mathcal{M}_2$,$\mathcal{M}_3$,$\mathcal{M}_4$]. |
| SPIC*nx* RSUMIS RD MLS [$\mathcal{M}_1$, $\mathcal{M}_2$,$\mathcal{M}_3$,$\mathcal{M}_4$] | Corresponds to the second detector embodiment, namely real-valued SUMIS aided RD-MLS with SPIC. |
| LMMSE SPIC*nx* | Reference detector, namely (L)MMSE-SPIC with *n* iterations. |
| RSUMIS RD MLS [$\mathcal{M}_1$, $\mathcal{M}_2$,$\mathcal{M}_3$, $\mathcal{M}_4$] | It is essentially the same detector as mentioned above but without any MMSE-SPIC in the first stage. |
| LMMSE | Reference detector, withouy any SPIC processing. |

**Figure 4B** shows normalised throughput versus SNR for the test case-1 setup. The performance of the disclosed detectors under ideal channel estimate and noise variance knowledge. As expected, the herein described detector embodiments outperform the linear detectors without and with SPIC, namely LMMSE and LMMSE-SPIC. The performance of each of these respective illustrated detectors may be as good as the optimal Maximum Likelihood detector according to some embodiments.

Key simulation parameters for test case-2 are summarised in **Table 5.**

**Table 5**

| | |
|---|---|
| Cell Bandwidth | 10 MHz |
| Transmit EVM | 6% |
| MIMO Configuration ($N_R$ x $N_T$) | 4 x 4 |

(continued)

| | |
|---|---|
| PDSCH Resource Allocation | 50 PRB-pair |
| Transmission Mode | 3 (OLSM Rank-4) with no fallback mode to SFBC. |
| Modulation and Code Rate | 64QAM 0.85 |
| Channel Model | ETU 70 Low |
| Channel and noise variance estimation | Practical, 2x1D LMMSE, and ideal for LMMSE reference detector |
| HARQ | Enabled |
| Number of Subframes | 1000 |

The definitions of the legends utilised in **Figure 4C** are summarised in **Table 6.**

**Table 6**

| | |
|---|---|
| SPIC*n*x RD MLS with CErAware | SPIC aided RD-MLS with *n* iterations but incorporates the channel estimation error variance knowledge for the path metrics computation. |
| SPIC*n*x RD MLS | SPIC aided RD-MLS with *n* iterations but channel estimation error unaware. |
| LMMSE (ideal CE) | Reference detector, namely (L)MMSE with perfect channel estimates and noise variance knowledge. |
| LMMSE | Reference detector LMMSE but the performance obtained under practical channel knowledge. |

**Figure 4C** illustrates the performance of the disclosed detectors considering channel estimation error variance knowledge. As expected, the performance of RD-MLS can be improved significantly over the channel estimation error unaware detector.

Key simulation parameters for test case-3 are summarised in **Table 7.**

**Table 7**

| | |
|---|---|
| Cell Bandwidth | 1.4 MHz |
| Transmit EVM | 6% |
| MIMO Configuration ($N_R$ x $N_T$) | 4 x 4 |
| PDSCH Resource Allocation | 6 PRB-pair |
| Transmission Mode | 3 (OLSM Rank-4) with no fallback mode to SFBC. |
| Modulation and Code Rate | 16QAM 0.72 |
| Channel Model | ETU 300 Low |
| Channel and noise variance estimation | Ideal knowledge |
| HARQ | Enabled |
| Number of Subframes | 1000 |

The performance of the detector embodiment is shown in **Figure 4D** and the corresponding legends in the figure are defined in **Table 8.** As one can easily construe from the figure, the performance of the described low-complexity detector, particularly RSUMIS aided RD-MLS, is as good as the optimal detector in maximum-likelihood sense, namely MLM. **Figure 4D** illustrates normalised throughput versus SNR for the test case-3 set-up.

**Table 8**

| | |
|---|---|
| MLM | Maximum Likelihood detector and the soft bits are computed based on the max-log-MAP criterion. |

(continued)

| | |
|---|---|
| RSUMIS RD MLS [,,,] | As mentioned above, it is real-valued SUMIS aided RD-MLS detector with pre-defined number of candidates per spatial layer. |
| SPIC*n*x RD MLS [,,,] | MMSE-SPIC aided RD-MLS with *n* demodulator iterations and with pre-defined number of candidates per spatial layer. |
| SPIC*n*x | MMSE-SPIC with *n* demodulator iterations. |
| $\mathcal{M}_1 \mathcal{M}_2\mathcal{M}_3\mathcal{M}_4\mathcal{M}_1 \mathcal{M}_2\mathcal{M}_3$ $\mathcal{M}_4$ LMMSE | Reference detector LMMSE without any demodulator iterations. |

Thus some embodiments disclosed herein relates to efficient computation of the metrics for the remaining candidate vectors. Methods disclosed herein provide further reduction of the number of candidate vectors. Also, methods for efficient computations of the metrics for remaining candidate vectors within a real valued framework are disclosed. Further, methods of using self-iterated Soft-Parallel Interference Cancellations (SPIC) as an initialization step to generate a set of candidate vectors. In some embodiments, a method of using self-iterated real-SUMIS, with and without SPIC as an initialisation step to generate a set of candidate vectors. In addition, methods of incorporating knowledge of channel estimation errors into the disclosed art detectors. Also, hierarchical detectors for an arbitrary number of transmission layers according to some embodiments are disclosed.

**Figure 5** is a flow chart illustrating embodiments of a method **500** in a User Equipment (UE) 120. The method 500 aims at providing Multiple-Input and Multiple-Output (MIMO) detection of signals received from a radio network node 110, comprised in a wireless communication network 100.

The radio network node 110 may comprise an evolved NodeB (eNodeB). The wireless communication network 100 may be based on 3rd Generation Partnership Project Long Term Evolution (3GPP LTE), such as e.g. LTE-Advanced. Further, the wireless communication system 100 may be based on Frequency Division Duplex (FDD) and/ or Time Division Duplex (TDD) in different embodiments.

The herein made number of additions may in some embodiments be reduced such that: a depth 4 matrix requires $2\mathcal{M}_4\ \mathcal{M}_3\ \mathcal{M}_2\ \mathcal{M}_1 + \mathcal{M}_4\ \mathcal{M}_2\ \mathcal{M}_1 + \mathcal{M}_4\ \mathcal{M}_1$ real additions; a depth 3 matrix requires $2\mathcal{M}_3\ \mathcal{M}_2\ \mathcal{M}_1 + \mathcal{M}_3\ \mathcal{M}_1$ real additions; a depth 2 matrix requires $2\mathcal{M}_2$ real additions.

To appropriately provide MIMO detection of received signals, the method 500 may comprise a number of actions **501-511.**

It is however to be noted that any, some or all of the described actions 501-511, may be performed in a somewhat different chronological order than the enumeration indicates, be performed simultaneously or even be performed in a completely reversed order according to different embodiments. Some actions may be performed within some alternative embodiments such as e.g. actions 502-509. Further, it is to be noted that some actions may be performed in a plurality of alternative manners according to different embodiments, and that some such alternative manners may be performed only within some, but not necessarily all embodiments. The method 500 may comprise the following actions:

**Action 501**

A signal of the radio network node 110 is received.

**Action 502**

This action may be performed within some, but not all embodiments.

A Linear Minimum Mean Square Error (LMMSE) estimate of the transmitted modulation alphabet may be computed via the received 501 signal.

The computation of the LMMSE may in some embodiments be made on a complex- valued received 501 signal.

According to some embodiments, knowledge about errors in channel estimation may be utilised for computing path metrics of the hypotheses candidate vector.

**Action 503**

This action may be performed within some, but not all embodiments.

Soft parallel interference cancellation may be performed, with MMSE of the received 501 signal on a given number of iterations.

The performance of the soft parallel interference cancellation may in some embodiments comprise MMSE filtering on a complex- valued received 501 signal.

**Action 504**

This action may be performed within some, but not all embodiments.

The most likely candidates per spatial layer may be calculated independently for each layer, in some embodiments.

In some embodiments, in case of missing bits, the LLRs from the first stage processing may be utilised, which is LMMSE/ MMSE-SPIC demodulation.

Further, in some embodiments, a candidate reduction technique may be utilised in order to reduce the list of hypotheses candidate vector by pruning the most unlikely candidates' combinations forming the hypotheses.

**Action 505**

This action may be performed within some, but not all embodiments.

The complex-valued received 501 signal may be converted into real-valued; and thereby obtaining four 2x2 real-valued groups by utilising Subspace Marginalisation Interference Suppression (SUMIS) algorithm.

**Action 506**

This action may be performed within some, but not all embodiments where action 505 has been performed.

A set of most likely candidates for each 2x2 real-valued groups may be obtained, after having a set of most likely candidates for each group, and forming a list of all possible hypotheses candidate vector based on the candidates found in 2x2 real-valued groups.

**Action 507**

This action may be performed within some, but not all embodiments.

According to some embodiments, 2x2 complex-valued smaller MIMO groups may be established by utilising SUMIS algorithm.

**Action 508**

This action may be performed within some, but not all embodiments where action 507 has been performed.

The most likely set of candidates may be searched jointly in each 2x2 MIMO group.

**Action 509**

This action may be performed within some, but not all embodiments, where any of action 507 and/ or 508 has been performed.

The hypotheses candidate vector may be obtained by establishing all the possible combinations of the likely candidates obtained for each smaller 2x2 MIMO groups.

**Action 510**

A list of hypotheses candidate vector is established.

The list of hypotheses candidate vector may in some embodiments be established based on possible combinations of the calculated 504 most likely candidates per spatial layer.

**Action 511**

Path metrics of the established 510 list of hypotheses candidate vector is computed; thereby computing Log-Likelihood Ratios (LLRs) utilising the computed path metrics for achieving MIMO detection.

The computed path metrics of the established 510 list of hypotheses candidate vector may in some embodiments be evaluated recursively over a tree structure.

Further, the computed path metrics $\mu$ *(x)* of the established 510 list of hypotheses candidate vector may be expressed as:

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m),$$

wherein $\gamma$ is layer and $x_n$ is the candidate symbol for an *n*-th layer.

**Figure 6** illustrates an embodiment of a User Equipment (UE) 120. The UE 120 is configured for performing at least some of the previously described method actions 501-511, for MIMO detection of signals received from a radio network node 110, comprised in a wireless communication network 100.

The radio network node 110 may comprise an evolved NodeB (eNodeB). The wireless communication network 100 may be based on 3rd Generation Partnership Project Long Term Evolution (3GPP LTE), such as LTE- Advanced. Further, the wireless communication system 100 may be based on FDD or TDD in different embodiments.

For enhanced clarity, any internal electronics or other components of the UE 120, not completely indispensable for understanding the herein described embodiments has been omitted from Figure 6.

The UE 120 comprises a receiving circuit **610,** configured for receiving signals from the radio network node 110.

Such receiving circuit 610 in the UE 120 may be configured for receiving wireless signals from the radio network node 110 or any other entity configured for wireless communication over a wireless interface according to some embodiments.

Further, the UE 120 also comprises a processing circuit **620,** configured for establishing a list of hypotheses candidate vector. Also, the processing circuit 620 is also configured for computing path metrics of the established list of hypotheses candidate vector by computing Log-Likelihood Ratios (LLR) utilising the computed path metrics for achieving MIMO detection.

The processing circuit 620 may furthermore be configured for Linear Minimum Mean Square Error (LMMSE) estimate of transmitted modulation alphabet via the received signal.

Also, the processing circuit 620 may further be configured for computing LMMSE on a complex- valued received signal.

The processing circuit 620 may further, in some embodiments be configured for performing soft parallel interference cancellation with MMSE of the received signal on a given number of iterations.

Additionally, the processing circuit 620 may be further configured for performing the soft parallel interference cancellation comprises MMSE filtering on a complex- valued received signal.

Moreover, the processing circuit 620 may further be configured for calculating the most likely candidates per spatial layer independently for each layer, according to some embodiments.

The processing circuit 620 may be further configured for establishing the list of hypotheses candidate vector, based on possible combinations of the calculated most likely candidates per spatial layer.

Also, the processing circuit 620 may furthermore be configured for converting complex-valued received signal into real-valued; and thereby obtaining four 2x2 real-valued groups by utilising Subspace Marginalisation Interference Suppression (SUMIS) algorithm.

The processing circuit 620 may further be additionally configured for also obtaining a set of most likely candidates for each 2x2 real-valued groups, after having a set of most likely candidates for each group, and forming a list of all possible hypotheses candidate vector based on the candidates found in 2x2 real-valued groups, in some embodiments.

The processing circuit 620 may in some embodiments be further configured for utilising the LLRs from the first stage processing.

In addition, the processing circuit 620 may be furthermore configured for computing LMMSE of the received signal by utilising knowledge about errors in channel estimation.

The processing circuit 620 may be further configured, in some embodiments, for utilising a candidate reduction technique in order to reduce the number of candidates before calculating the most likely candidates per spatial layer independently for each layer.

The processing circuit 620 may furthermore be configured for computing path metrics of the established list of hypotheses candidate vector, evaluated recursively over a tree structure.

Also, the processing circuit 620 may further be configured for computing path metrics $\mu$ *(x)* of the established list of hypotheses candidate vector, expressed as:

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m),$$

wherein $\gamma$ is layer and $x_n$ is the candidate symbol for an *n*-th layer.

The processing circuit 620 may be further configured for reducing the number of additions such that: a depth 4 matrix requires $2\mathcal{M}_4\ \mathcal{M}_3\ \mathcal{M}_2\ \mathcal{M}_1 + \mathcal{M}_4\ \mathcal{M}_2\ \mathcal{M}_1 + \mathcal{M}_4\ \mathcal{M}_1$ real additions; a depth 3 matrix requires $2\mathcal{M}_3\ \mathcal{M}_2\ \mathcal{M}_1 + \mathcal{M}_3\ \mathcal{M}_1$ real additions; a depth 2 matrix requires $2\mathcal{M}_2\ \ \mathcal{M}_1$ real additions.

Such processing circuit 620 may comprise one or more instances of a processor, i.e. a Central Processing Unit (CPU), a processing unit, a processing circuit, an Application Specific Integrated Circuit (ASIC), a microprocessor, or other processing logic that may interpret and execute instructions. The herein utilised expression "processing circuit" may thus represent a processing circuitry comprising a plurality of processing circuits, such as, e.g., any, some or all of the ones enumerated above.

In addition according to some embodiments, the UE 120 may in some embodiments also comprise at least one memory **625** in the UE 120. The optional memory 625 may comprise a physical device utilised to store data or programs, i.e., sequences of instructions, on a temporary or permanent basis. According to some embodiments, the memory 625 may comprise integrated circuits comprising silicon-based transistors. Further, the memory 625 may be volatile or non-volatile.

Also, the UE 120 furthermore may comprise a transmitting circuit **630,** which may be configured for transmitting wireless signals according to some embodiments.

In some alternative embodiments, the UE 120 and/ or the processing circuit 620 may comprise an establishing unit, configured for establishing a list of hypotheses candidate vector. Also, the UE 120 and/ or the processing circuit 620 may comprise a computing unit, configured for computing path metrics of the established list of hypotheses candidate vector, and thereby computing LLRs utilising the computed path metrics for achieving MIMO detection.

The actions 501-511 to be performed in the UE 120 may be implemented through the one or more processing circuits 620 in the UE 120 together with computer program product for performing the functions of the actions 501-511.

Thus a computer program product comprising program code for performing the method 500 according to any of actions 501-511, for MIMO detection of signals received from a radio network node 110 according to any of the actions 501-511, when the computer program product is loaded in a processing circuit 620 of the UE 120.

Consequently, the computer program product may comprise a computer readable storage medium storing program code thereon for MIMO detection of signals received from a radio network node 110, comprised in a wireless communication network 100, by performing a method 500 comprising: receiving 501 a signal of the radio network node 110; establishing 510 a list of hypotheses candidate vector; and computing 511 path metrics of the established 510 list of hypotheses candidate vector, and thereby computing LLRs utilising the computed path metrics for achieving MIMO detection.

The computer program product mentioned above may be provided for instance in the form of a data carrier carrying computer program code for performing at least some of the actions 501-511 according to some embodiments when being loaded into the processing circuit 620 comprised in the UE 120. The data carrier may be, e.g., a hard disk, a CD ROM disc, a memory stick, an optical storage device, a magnetic storage device or any other appropriate medium such as a disk or tape that may hold machine readable data in a non transitory manner. The computer program product may furthermore be provided as computer program code on a server and downloaded to the UE 120, e.g., over an Internet or an intranet connection.

The terminology used in the description of the embodiments as illustrated in the accompanying drawings is not intended to be limiting of the described method embodiments 500; radio network node 110 and/ or UE 120. Various changes, substitutions and/ or alterations may be made, without departing from the invention as defined by the appended claims.

As used herein, the term "and/ or" comprises any and all combinations of one or more of the associated listed items. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processing circuit 620 may fulfil the functions of several items recited in the claims. The mere fact that certain measures are recited in mutually different dependent claims does not indicate that a combination of these measures cannot be used to advantage. A computer program may be stored/ distributed on a suitable medium, such as an optical storage medium or a solid-state medium supplied together with or as part of other hardware, but may also be distributed in other forms such as via Internet or other wired or wireless communication system.

## Claims

**1.** A method (500) in a User Equipment, UE (120), for Multiple-Input and Multiple-Output, MIMO, detection of signals received from a radio network node (110), comprised in a wireless communication network (100), the method (500) comprising:

receiving (501) a signal of the radio network node (110);
establishing (510) a list of hypotheses candidate vector;
computing (511) path metrics of the established (510) list of hypotheses candidate vector, and thereby computing Log-Likelihood Ratios, LLRs, utilising the computed path metrics for achieving MIMO detection, wherein the computed (511) path metrics of the established (510) list of hypotheses candidate vector is expressed as:

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m).$$

wherein $\gamma_k(x_n) \equiv -\mathrm{R}\{x_n^* z_k\} + |x_n|^2 \dfrac{\mathrm{G}_{k,k}}{2}, \quad \delta_{mn}(x, y) \cong \mathrm{R}\{x^* \mathrm{G}_{m,m} y\},$
wherein $\mathbf{G} = \mathbf{H}^H\mathbf{H}$ and $\mathbf{z} = \mathbf{H}^H\mathbf{y}$
wherein **H** is a effective channel matrix, wherein $\mathbf{y} = \mathbf{Hx} + \mathbf{w}$, wherein w is a complex white Gaussian noise vector, wherein $x_k$ is a candidate symbol of a k-th layer, wherein R{...} is a real part of {...}.

**2.** The method (500) according to claim 1, further comprising:

computing (502) Linear Minimum Mean Square Error, LMMSE, estimate of the transmitted modulation alphabet via the received (501) signal.

**3.** The method (500) according to any of claims 1-2, further comprising:

performing (503) soft parallel interference cancellation with MMSE of the received (501) signal on a given number of iterations.

**4.** The method (500) according to any of claims 1-3, further comprising:

calculating (504) the most likely candidates per spatial layer independently for each layer.

**5.** The method (500) according to any of claims 1-4, wherein knowledge about errors in channel estimation is utilised for computing (502) path metrics of the hypotheses candidate vector.

**6.** The method (500) according to any of claims 1-5, wherein the number of additions is reduced such that:

a depth 4 matrix requires $2M_4\, M_3\, M_2\, M_1 + M_4\, M_2\, M_1 + M_4\, M_1$ real additions;
a depth 3 matrix requires $2M_3\, M_2\, M_1 + M_3\, M_1$ real additions;
a depth 2 matrix requires $2M_2\, M_1$ real additions, wherein $M_k$ is a number of candidates for $x_k$.

**7.** A User Equipment, UE (120), configured for Multiple-Input and Multiple-Output, MIMO, detection of signals received from a radio network node (110), comprised in a wireless communication network (100), the UE (120) comprising:

a receiving circuit (610), configured for receiving signals from the radio network node (110);
a processing circuit (620), configured for establishing a list of hypotheses candidate vector, and also configured for computing path metrics of the established list of hypotheses candidate vector by computing Log-Likelihood Ratios, LLR, utilising the computed path metrics for achieving MIMO detection, wherein the computed path metrics of the established list of hypotheses candidate vector is expressed as:

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m).$$

wherein $\gamma_k(x_n) \equiv -\mathrm{R}\{x_n^* z_k\} + |x_n|^2 \frac{\mathrm{G}_{k,k}}{2}$, $\delta_{mn}(x,y) \cong \mathrm{R}\{x^* \mathrm{G}_{m,m} y\}$,

wherein $\mathbf{G} = \mathbf{H}^H\mathbf{H}$ and $\mathbf{z} = \mathbf{H}^H\mathbf{y}$

wherein **H** is a effective channel matrix, wherein **y = Hx + w,** wherein w is a complex white Gaussian noise vector, wherein $x_k$ is a candidate symbol of a k-th layer, wherein R{...} is a real part of {...}.

**8.** The UE (120) according to claim 7, wherein the processing circuit (620) is further configured for Linear Minimum Mean Square Error, LMMSE, estimate of transmitted modulation alphabet via the received signal.

**9.** The UE (120) according to claim 8, wherein the processing circuit (620) is further configured for computing LMMSE on a complex- valued received signal.

**10.** The UE (120) according to any of claims 7-9, wherein the processing circuit (620) is further configured for performing soft parallel interference cancellation with MMSE of the received signal on a given number of iterations.

**11.** A computer program product adapted to be loaded in a processing circuit (620) of a UE (120) according to any of claims 7-10, comprising instructions for performing the method (500) for MIMO detection of signals received from a radio network node (110) according to any of claims 1-6.

**12.** A processor adapted to be used in a User Equipment, UE (120), configured for Multiple-Input and Multiple-Output, MIMO, detection of signals received from a radio network node (110), comprised in a wireless communication network (100), wherein the UE is adapted to receive signals from the radio network node (110) and the processor is configured to:

establish a list of hypotheses candidate vector, and also configured to compute path metrics of the established list of hypotheses candidate vector by computing Log-Likelihood Ratios, LLR, utilising the computed path metrics for achieving MIMO detection, wherein the computed path metrics of the established list of hypotheses candidate vector is expressed as:

$$\mu(x_L, x_{L-1}, \ldots, x_1) = \mu(x_{L-1}, \ldots, x_1) + \gamma_L(x_L) + \sum \delta_{Lm}(x_L, x_m).$$

wherein $\gamma_k(x_n) \equiv -\mathrm{R}\{x_n^* z_k\} + |x_n|^2 \frac{\mathrm{G}_{k,k}}{2}$, $\delta_{mn}(x,y) \cong \mathrm{R}\{x^* \mathrm{G}_{m,m} y\}$, wherein $\mathbf{G} = \mathbf{H}^H\mathbf{H}$ and $\mathbf{z} = \mathbf{H}^H\mathbf{y}$ wherein **H** is a effective channel matrix, wherein **y = Hx** + **w,** wherein w is a complex white Gaussian noise vector, wherein $x_k$ is a candidate symbol of a k-th layer, wherein R{...} is a real part of {...}.

## Patentansprüche

**1.** Verfahren (500) in einem Benutzergerät UE (120) zur Mehrfacheingang- und Mehrfachausgang- bzw. MIMO-Detektion von Signalen, die von einem Funknetzknoten (110) empfangen werden, der in einem drahtlosen Kommunikationsnetz (100) enthalten ist, wobei das Verfahren (500) Folgendes umfasst:

Empfangen (501) eines Signals des Funknetzknotens (110);
Ermitteln (510) eines Liste-von-Hypothesen-Kandidatenvektors;
Berechnen (511) von Pfadmetriken des ermittelten (510) Liste-von-Hypothesen-Kandidatenvektors und dadurch Berechnen von Log-Likelihood-Verhältnissen LLR unter Verwendung der berechneten Pfadmetriken zur Erzielung von MIMO-Detektion, wobei die berechneten (511) Pfadmetriken des ermittelten (510) Liste-von-Hypothesen-Kandidatenvektors als

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m)$$

ausgedrückt werden, wobei

$$\gamma_k(x_n) \equiv -\mathrm{R}\{x_n^* z_k\} + |x_n|^2 \frac{\mathbf{G}_{k,k}}{2}, \quad \delta_{mn}(x, y) \cong \mathrm{R}\{x^* \mathbf{G}_{m,m} y\},$$

ist,
wobei $\mathbf{G} = \mathbf{H}^H\mathbf{H}$ und $\mathbf{z} = \mathbf{H}^H\mathbf{y}$ ist,
wobei **H** eine effektive Kanalmatrix ist, wobei $\mathbf{y} = \mathbf{Hx} + \mathbf{w}$ ist, wobei **w** ein komplexer weißes-gaußsches-Rauschen-Vektor ist, wobei $x_k$ ein Kandidatensymbol einer k-ten Schicht ist, wobei R{...} ein Realteil von {...} ist.

**2.** Verfahren (500) nach Anspruch 1, ferner umfassend:

Berechnen (502) einer Schätzung des linearen minimalen mittleren quadratischen Fehlers LMMSE des übertragenen Modulationsalphabets über das empfangene (501) Signal.

**3.** Verfahren (500) nach einem der Ansprüche 1-2, ferner umfassend:

Durchführen (503) von Soft-Parallel-Störungslöschung mit MMSE des empfangenen (501) Signals an einer gegebenen Anzahl von Iterationen.

**4.** Verfahren (500) nach einem der Ansprüche 1-3, ferner umfassend:

Berechnen (504) der wahrscheinlichsten Kandidaten pro räumlicher Schicht unabhängig für jede Schicht.

**5.** Verfahren (500) nach einem der Ansprüche 1-4, wobei Kenntnis über Fehler bei der Kanalschätzung zur Berechnung (502) von Pfadmetriken des Hypothesen-Kandidatenvektors benutzt wird.

**6.** Verfahren (500) nach einem der Ansprüche 1-5, wobei die Anzahl von Additionen verringert wird, so dass:

eine Tiefe-4-Matrix $2M_4 M_3 M_2 M_1 + M_4 M_2 M_1 + M_4 M_1$ reelle Additionen erfordert;
eine Tiefe-3-Matrix $2M_3 M_2 M_1 + M_3 M_1$ reelle Additionen erfordert;
eine Tiefe-2-Matrix $2M_2 M_1$ reelle Additionen erfordert, wobei $M_k$ eine Anzahl von Kandidaten für $x_k$ ist.

**7.** Benutzergerät UE (120), ausgelegt zur Mehrfacheingang- und Mehrfachausgang- bzw. MIMO-Detektion von Signalen, die von einem Funknetzknoten (110) empfangen werden, der in einem drahtlosen Kommunikationsnetz (100) enthalten ist, wobei das UE (120) Folgendes umfasst:

eine Empfangsschaltung (610), ausgelegt zum Empfangen von Signalen von dem Funknetzknoten (110);
eine Verarbeitungsschaltung (620), ausgelegt zum Ermitteln eines Liste-von-Hypothesen-Kandidatenvektors und auch ausgelegt zum Berechnen von Pfadmetriken des ermittelten Liste-von-Hypothesen-Kandidatenvektors durch Berechnen von Log-Likelihood-Verhältnissen LLR unter Verwendung der berechneten Pfadmetriken zur Erzielung von MIMO-Detektion, wobei die berechneten Pfadmetriken des ermittelten Liste-von-Hypothesen-Kandidatenvektors als

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m)$$

ausgedrückt werden, wobei

$$\gamma_k(x_n) \equiv -\mathrm{R}\{x_n^* z_k\} + |x_n|^2 \frac{\mathbf{G}_{k,k}}{2}, \quad \delta_{mn}(x,y) \cong \mathrm{R}\{x^* \mathbf{G}_{m,m} y\},$$

ist,
wobei $\mathbf{G} = \mathbf{H}^H\mathbf{H}$ und $\mathbf{z} = \mathbf{H}^H\mathbf{y}$ ist,
wobei **H** eine effektive Kanalmatrix ist, wobei $\mathbf{y} = \mathbf{Hx} + \mathbf{w}$ ist, wobei **w** ein komplexer weißes-gaußsches-Rauschen-Vektor ist, wobei $x_k$ ein Kandidatensymbol einer k-ten Schicht ist, wobei R{...} ein Realteil von {...} ist.

8. UE (120) nach Anspruch 7, wobei die Verarbeitungsschaltung (620) ferner ausgelegt ist zum Schätzen des linearen minimalen mittleren quadratischen Fehlers LMMSE des übertragenen Modulationsalphabets über das empfangene Signal.

9. UE (120) nach Anspruch 8, wobei die Verarbeitungsschaltung (620) ferner ausgelegt ist zum Berechnen des LMMSE an einem komplexwertigen empfangenen Signal.

10. UE (120) nach einem der Ansprüche 7-9, wobei die Verarbeitungsschaltung (620) ferner ausgelegt ist zum Durchführen von Soft-Parallel-Störungslöschung mit MMSE des empfangenen Signals an einer gegebenen Anzahl von Iterationen.

11. Computerprogrammprodukt, das dafür ausgelegt ist, in eine Verarbeitungsschaltung (620) eines UE (120) nach einem der Ansprüche 7-10 geladen zu werden, mit Anweisungen zum Ausführen des Verfahrens (500) zur MIMO-Detektion von Signalen, die von einem Funknetzknoten (110) empfangen werden, nach einem der Ansprüche 1-6.

12. Prozessor, ausgelegt zur Verwendung in einem Benutzergerät UE (120), das für Mehrfacheingang- und Mehrfachausgang- bzw. MIMO-Detektion von Signalen ausgelegt ist, die von einem Funknetzknoten (110) empfangen werden, der in einem drahtlosen Kommunikationsnetz (100) enthalten ist, wobei das UE dafür ausgelegt ist, Signale von dem Funknetzknoten (110) zu empfangen und der Prozessor ausgelegt ist zum
Ermitteln eines Liste-von-Hypothesen-Kandidatenvektors und außerdem ausgelegt zum Berechnen von Pfadmetriken des ermittelten Liste-von-Hypothesen-Kandidatenvektors durch Berechnen von Log-Likelihood-Verhältnissen LLR unter Verwendung der berechneten Pfadmetriken zur Erzielung von MIMO-Detektion, wobei die berechneten Pfadmetriken des ermittelten Liste-von-Hypothesen-Kandidatenvektors als

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m)$$

ausgedrückt werden, wobei

$$\gamma_k(x_n) \equiv -\mathrm{R}\{x_n^* z_k\} + |x_n|^2 \frac{\mathbf{G}_{k,k}}{2}, \quad \delta_{mn}(x,y) \cong \mathrm{R}\{x^* \mathbf{G}_{m,m} y\},$$

ist,
wobei $\mathbf{G} = \mathbf{H}^H\mathbf{H}$ und $\mathbf{z} = \mathbf{H}^H\mathbf{y}$ ist,
wobei **H** eine effektive Kanalmatrix ist, wobei $\mathbf{y} = \mathbf{Hx} + \mathbf{w}$ ist, wobei **w** ein komplexer weißes-gaußsches-Rauschen-Vektor ist, wobei $x_k$ ein Kandidatensymbol einer k-ten Schicht ist, wobei R{...} ein Realteil von {...} ist.

## Revendications

1. Procédé (500), dans un Equipement Utilisateur, UE (User Equipment) (120), destiné à la détection par Entrées Multiples et Sorties Multiples, MIMO (Multiple-Input and Multiple-Output), de signaux reçus en provenance d'un noeud de réseau radio (110), contenu dans un réseau de communication sans fil (100), le procédé (500) comprenant :

la réception (501) d'un signal du noeud de réseau radio (110) ;
l'établissement (510) d'une liste de vecteurs d'hypothèses candidats ;
le calcul (511) d'une métrique de trajet de la liste établie (510) de vecteurs d'hypothèses candidats, et de ce fait, le calcul de Rapports de Vraisemblance Logarithmique, LLR (Log-Likelihood Ratios) en utilisant la métrique de trajet calculée pour effectuer une détection MIMO, dans lequel la métrique de trajet calculée (511) de la liste établie (510) de vecteurs d'hypothèses candidats est exprimée sous la forme suivante :

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m),$$

où $\gamma_k(x_n) \equiv -R\{x_n^* z_k\} + |x_n|^2 \frac{G_{k,k}}{2}$, $\delta_{mn}(x,y) \cong R\{x^* G_{m,m} y\}$, où $\mathbf{G}=\mathbf{H}^H\mathbf{H}$ et $\mathbf{z}=\mathbf{H}^H\mathbf{y}$,
où **H** est une matrice de canal effective, où $\mathbf{y} = \mathbf{Hx} + \mathbf{w}$, où w est un vecteur de bruit blanc Gaussien, où $x_k$ est un symbole candidat d'une k-ème couche, où R{...} est une partie réelle de {...}.

**2.** Procédé (500) selon la revendication 1, comprenant en outre :

le calcul (502) d'une estimée de l'Erreur Quadratique Moyenne Minimale Linéaire, LMMSE (Linear Minimum Mean Square Error), de l'alphabet de modulation transmis via le signal reçu (501).

**3.** Procédé (500) selon l'une quelconque des revendications 1 et 2, comprenant en outre :

l'exécution (503) d'une annulation de brouillage en parallèle non stricte par MMSE du signal reçu (501) sur un nombre donné d'itérations.

**4.** Procédé (500) selon l'une quelconque des revendications 1 à 3, comprenant en outre :

le calcul (504) des candidats les plus vraisemblables par couche spatiale indépendamment pour chaque couche spatiale.

**5.** Procédé (500) selon l'une quelconque des revendications 1 à 4, dans lequel la connaissance des erreurs affectant l'estimation de canal est exploitée pour calculer (502) une métrique de trajet du vecteur d'hypothèses candidates.

**6.** Procédé (500) selon l'une quelconque des revendications 1 à 5, dans lequel le nombre d'additions est réduit de manière à ce que :

une matrice de profondeur 4 nécessite $2M_4 M_3 M_2 M_1 + M_4 M_2 M_1 + M_4 M_1$ additions réelles ;
une matrice de profondeur 3 nécessite $2M_3 M_2 M_1 + M_3 M_1$ additions réelles ;
une matrice de profondeur 2 nécessite $2M_2 M_1$ additions réelles, où $M_k$ est un nombre de candidats pour $x_k$.

**7.** Equipement Utilisateur, UE (120), configuré pour la détection par Entrées Multiples et Sorties Multiples, MIMO, de signaux reçus en provenance d'un noeud de réseau radio (110), contenu dans un réseau de communication sans fil (100), l'UE (120) comprenant :

un circuit de réception (610) configuré pour recevoir des signaux en provenance du noeud de réseau radio (110) ;
un circuit de traitement (620), configuré pour établir une liste de vecteurs d'hypothèses candidats et également configuré pour calculer une métrique de trajet de la liste de vecteurs d'hypothèses candidats par calcul de Rapports de Vraisemblance Logarithmique, LLR, par utilisation de la métrique de trajet calculée pour effectuer la détection MIMO, dans lequel la métrique de trajet calculée de la liste établie de vecteurs d'hypothèses candidats est exprimée sous la forme suivante :

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m),$$

où $\gamma_k(x_n) \equiv -R\{x_n^* z_k\} + |x_n|^2 \frac{G_{k,k}}{2}$, $\delta_{mn}(x,y) \cong R\{x^* G_{m,m} y\}$, où **G=H^H H** et **z= H^H y,**
où **H** est une matrice de canal effective, où **y = Hx + w,** où w est un vecteur de bruit blanc Gaussien, où $x_k$ est un symbole candidat d'une k-ème couche, où R{...} est une partie réelle de { ... } .

**8.** UE (120) selon la revendication 7, dans lequel le circuit de traitement (620) est en outre configuré pour effectuer une estimation de l'Erreur Quadratique Moyenne Minimale Linéaire, LMMSE, de l'alphabet de modulation transmis via le signal reçu.

**9.** UE (120) selon la revendication 8, dans lequel le circuit de traitement (620) est en outre configuré pour calculer une LMMSE sur un signal reçu à valeurs complexes.

**10.** UE (120) selon l'une quelconque des revendications 7 à 9, dans lequel le circuit de traitement (620) est en outre configuré pour effectuer une annulation de brouillage en parallèle non stricte par MMSE du signal reçu sur un nombre donné d'itérations.

**11.** Produit de programme d'ordinateur apte à être chargé dans un circuit de traitement (620) d'un UE (120) selon l'une quelconque des revendications 7 à 10, comprenant des instructions destinées à la mise en oeuvre du procédé (500) de détection MIMO de signaux reçus en provenance d'un noeud de réseau radio (110) selon l'une quelconque des revendications 1 à 6.

**12.** Processeur apte à être utilisé dans un Equipement Utilisateur, UE (120), configuré pour la détection par Entrées Multiples et Sorties Multiples, MIMO, de signaux reçus en provenance d'un noeud de réseau radio (110), contenu dans un réseau de communication sans fil (100), dans lequel l'UE est apte à recevoir des signaux en provenance du noeud de réseau radio (110) et le processeur est configuré pour :

établir une liste de vecteurs d'hypothèses candidats, et est également configuré pour calculer une métrique de trajet de la liste établie de vecteurs d'hypothèses candidats par calcul de Rapports de Vraisemblance Logarithmique, LLR, par utilisation de la métrique de trajet calculée pour effectuer la détection MIMO, dans lequel la métrique de trajet calculée de la liste établie de vecteurs d'hypothèses candidats est exprimée sous la forme suivante :

$$\mu(x_L, x_{L-1}, \ldots, x_1) = \mu(x_{L-1}, \ldots, x_1) + \gamma_L(x_L) + \sum_{m=1}^{L-1} \delta_{Lm}(x_L, x_m),$$

où $\gamma_k(x_n) \equiv -R\{x_n^* z_k\} + |x_n|^2 \frac{G_{k,k}}{2}$, $\delta_{mn}(x,y) \cong R\{x^* G_{m,m} y\}$, où **G=H^H H** et **z= H^H y,**
où **H** est une matrice de canal effective, où **y = Hx + w,** où w est un vecteur de bruit blanc Gaussien, où $x_k$ est un symbole candidat d'une k-ème couche, où R{...} est une partie réelle de { ... } .

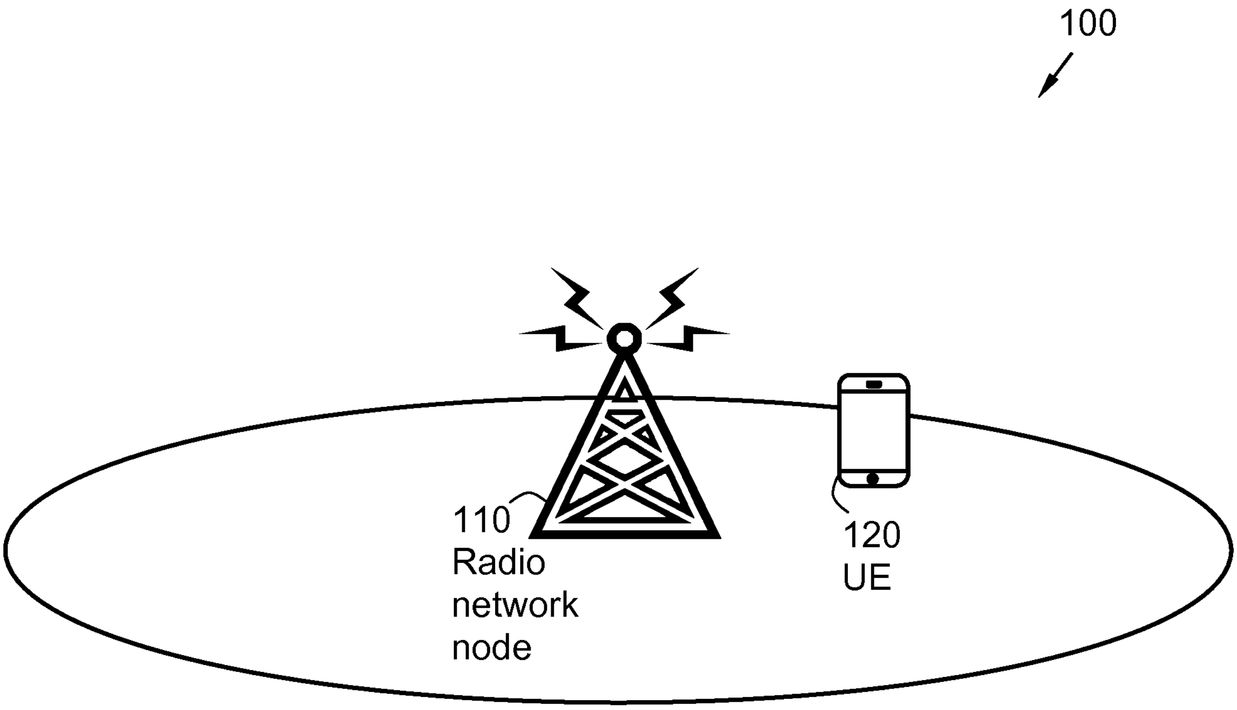


Fig. 1A

MMSE-SPIC-aided RD-MLS

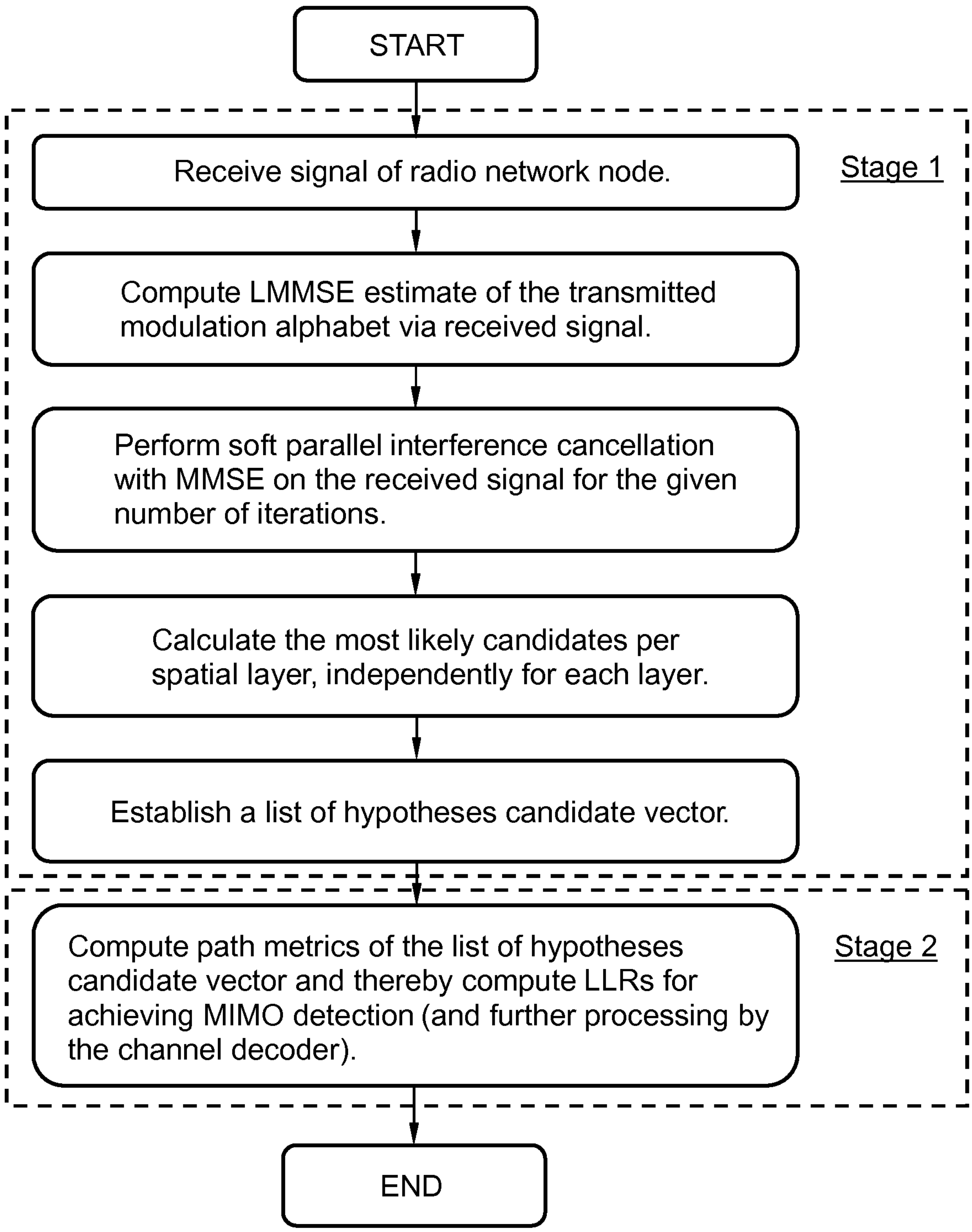


Fig. 1B

Real-valued-SUMIS-aided RD-MLS

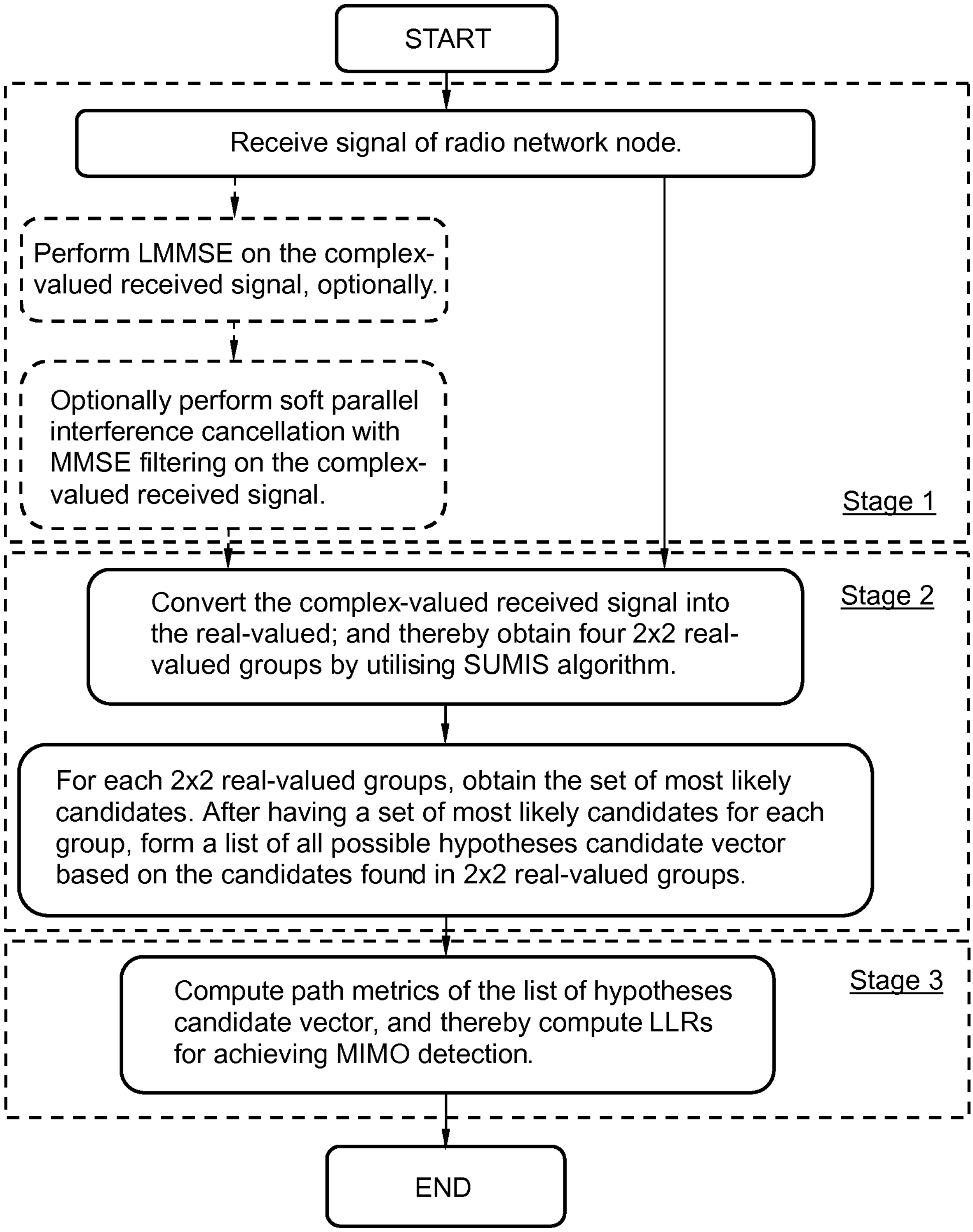


Fig. 1C

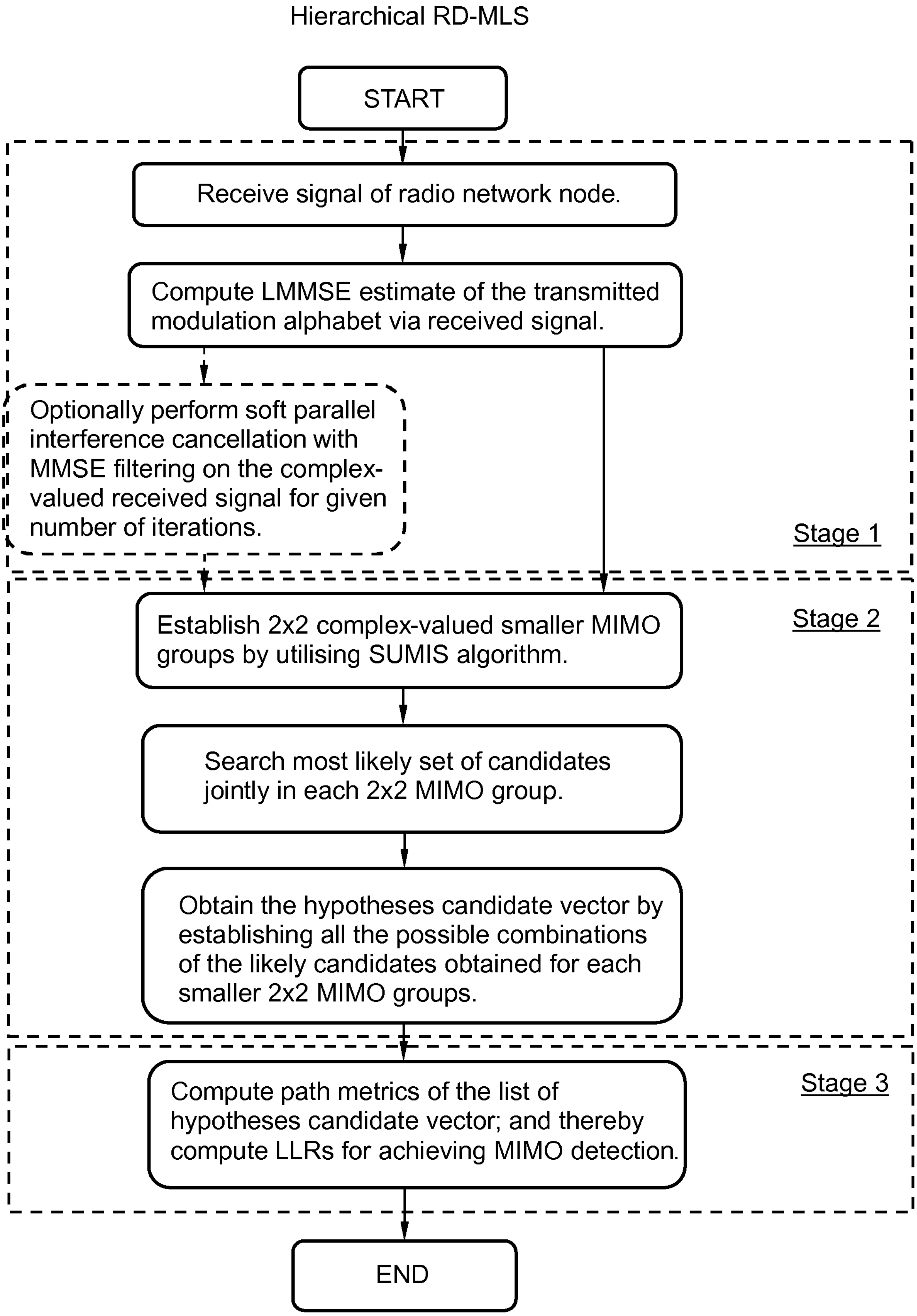
Hierarchical RD-MLS
START
Receive signal of radio network node.
Compute LMMSE estimate of the transmitted modulation alphabet via received signal.
Optionally perform soft parallel interference cancellation with MMSE filtering on the complex-valued received signal for given number of iterations.
Stage 1
Establish 2x2 complex-valued smaller MIMO groups by utilising SUMIS algorithm.
Stage 2
Search most likely set of candidates jointly in each 2x2 MIMO group.
Obtain the hypotheses candidate vector by establishing all the possible combinations of the likely candidates obtained for each smaller 2x2 MIMO groups.
Compute path metrics of the list of hypotheses candidate vector; and thereby compute LLRs for achieving MIMO detection.
Stage 3
END

Fig. 1D

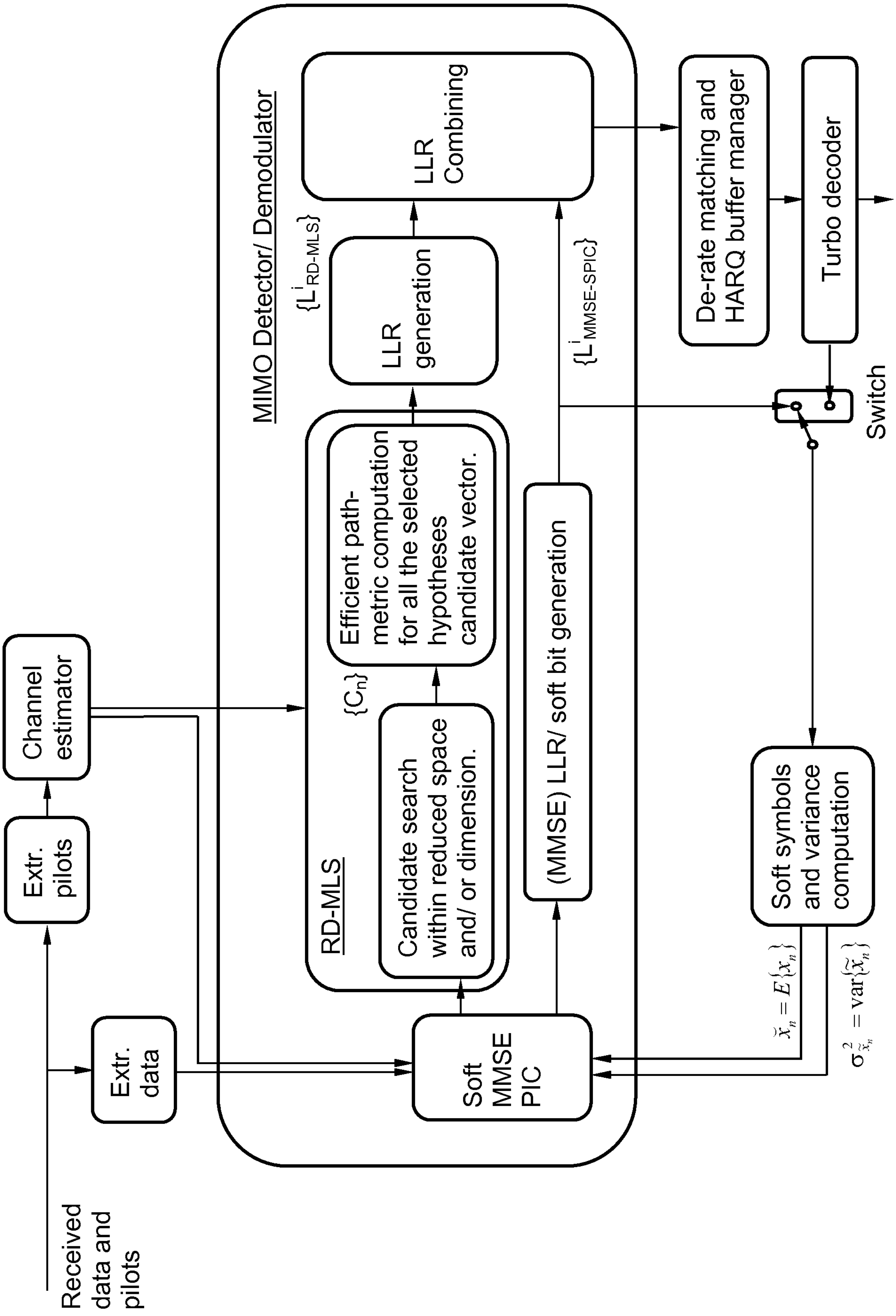
Received data and pilots
Extr. pilots
Channel estimator
Extr. data
MIMO Detector/ Demodulator
Soft MMSE PIC
RD-MLS
Candidate search within reduced space and/ or dimension.
{Cn}
Efficient path-metric computation for all the selected hypotheses candidate vector.
LLR generation
{Li RD-MLS}
LLR Combining
(MMSE) LLR/ soft bit generation
{Li MMSE-SPIC}
De-rate matching and HARQ buffer manager
Turbo decoder
Switch
Soft symbols and variance computation

Fig. 2

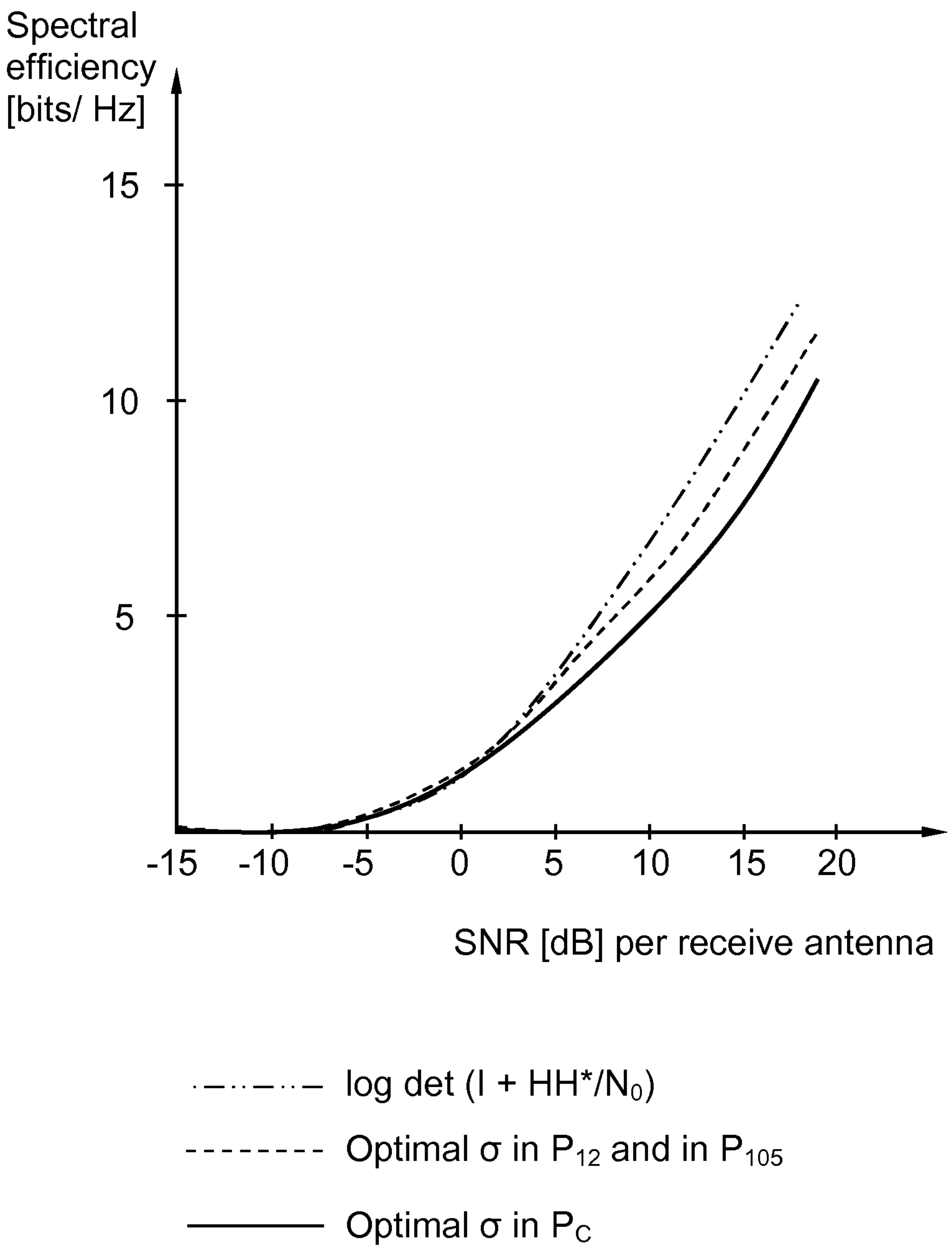
Spectral efficiency [bits/ Hz]
15
10
5
-15
-10
-5
0
5
10
15
20
SNR [dB] per receive antenna
log det (I + HH*/N0)
Optimal σ in P12 and in P105
Optimal σ in PC

Fig. 3

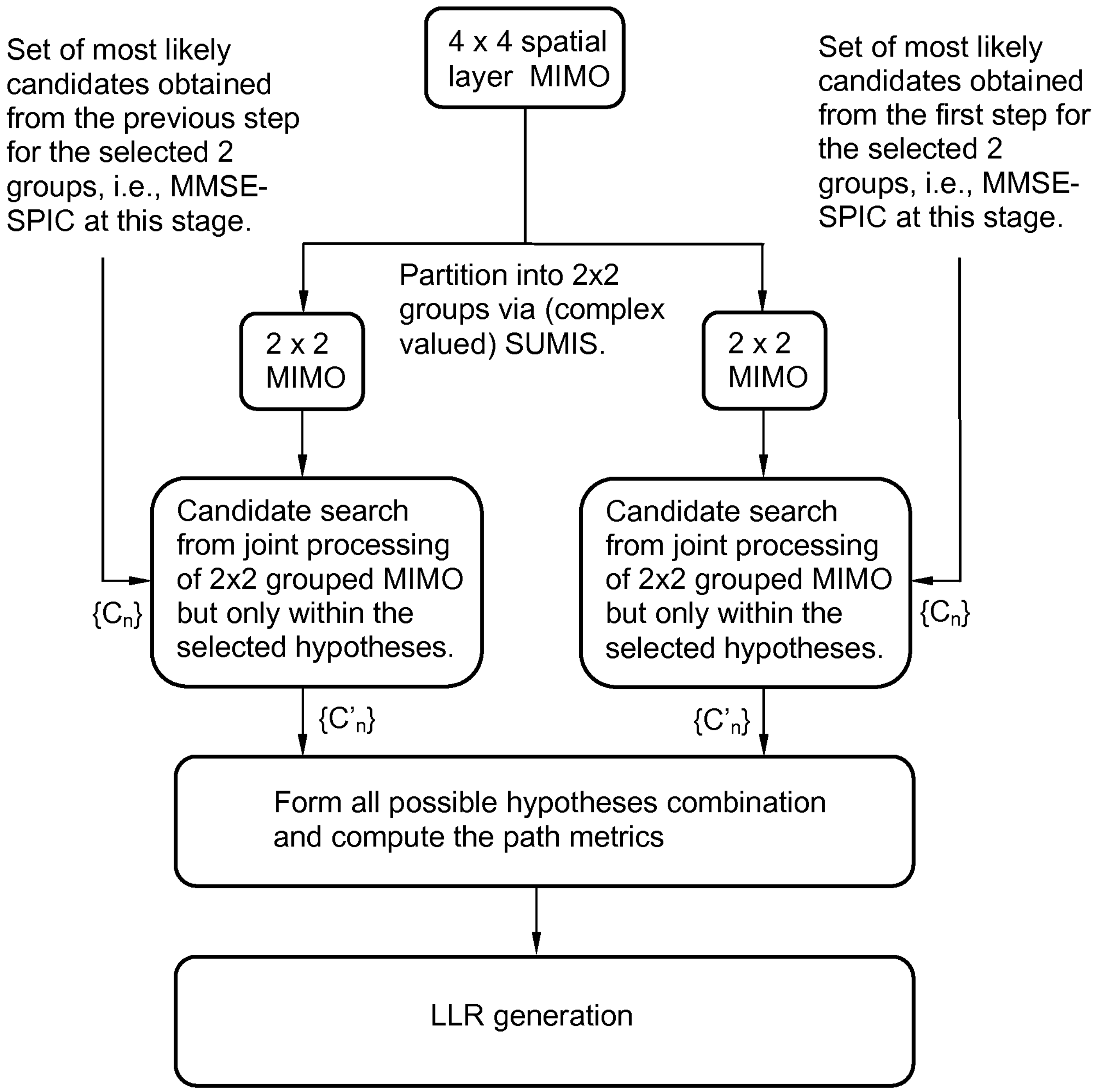
Set of most likely candidates obtained from the previous step for the selected 2 groups, i.e., MMSE-SPIC at this stage.
4 x 4 spatial layer MIMO
Set of most likely candidates obtained from the first step for the selected 2 groups, i.e., MMSE-SPIC at this stage.
Partition into 2x2 groups via (complex valued) SUMIS.
2 x 2 MIMO
2 x 2 MIMO
Candidate search from joint processing of 2x2 grouped MIMO but only within the selected hypotheses.
Candidate search from joint processing of 2x2 grouped MIMO but only within the selected hypotheses.
{$C_n$}
{$C_n$}
{$C'_n$}
{$C'_n$}
Form all possible hypotheses combination and compute the path metrics
LLR generation

Fig. 4A

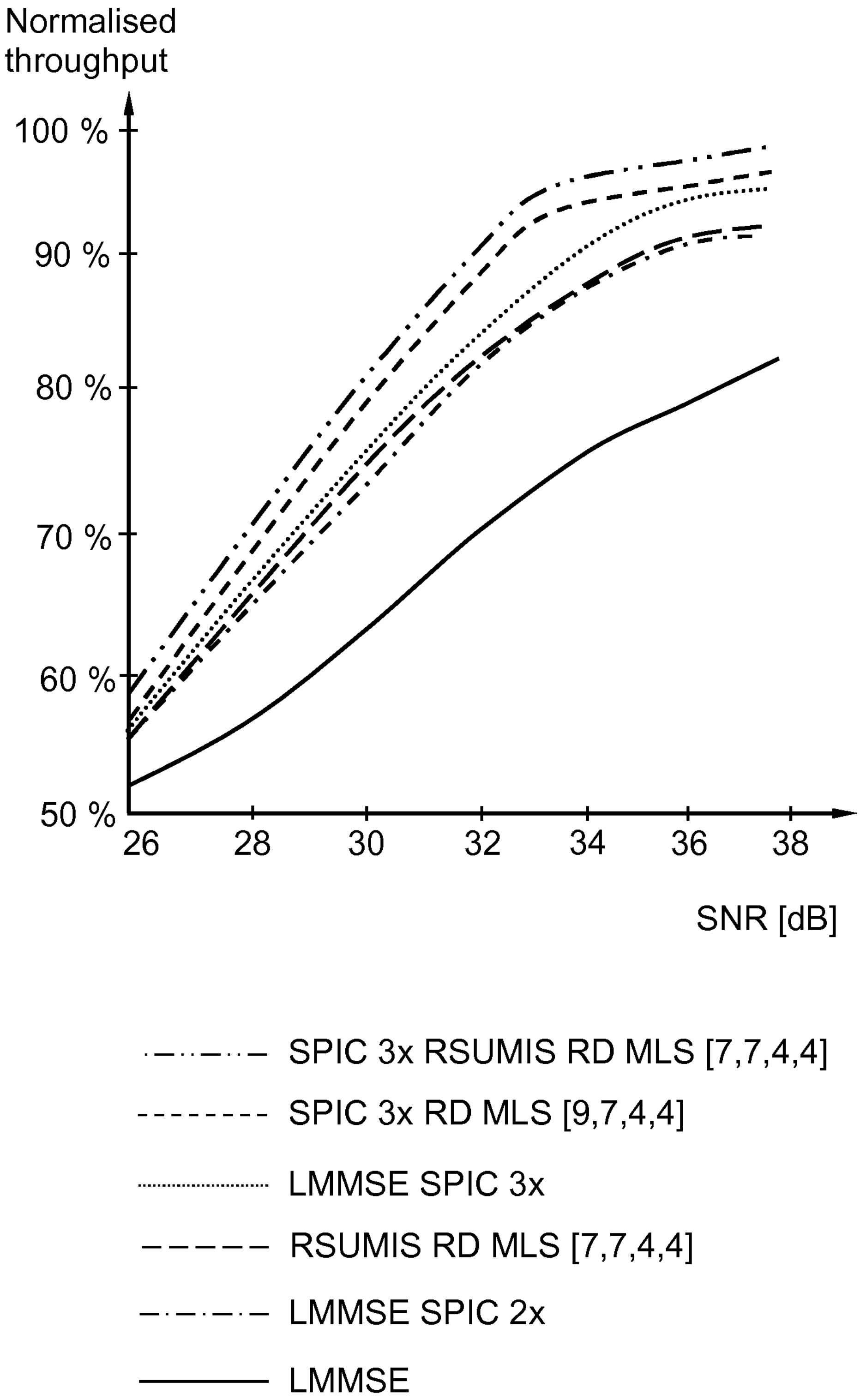
Normalised
throughput
100 %
90 %
80 %
70 %
60 %
50 %
26
28
30
32
34
36
38
SNR [dB]
SPIC 3x RSUMIS RD MLS [7,7,4,4]
SPIC 3x RD MLS [9,7,4,4]
LMMSE SPIC 3x
RSUMIS RD MLS [7,7,4,4]
LMMSE SPIC 2x
LMMSE

Fig. 4B

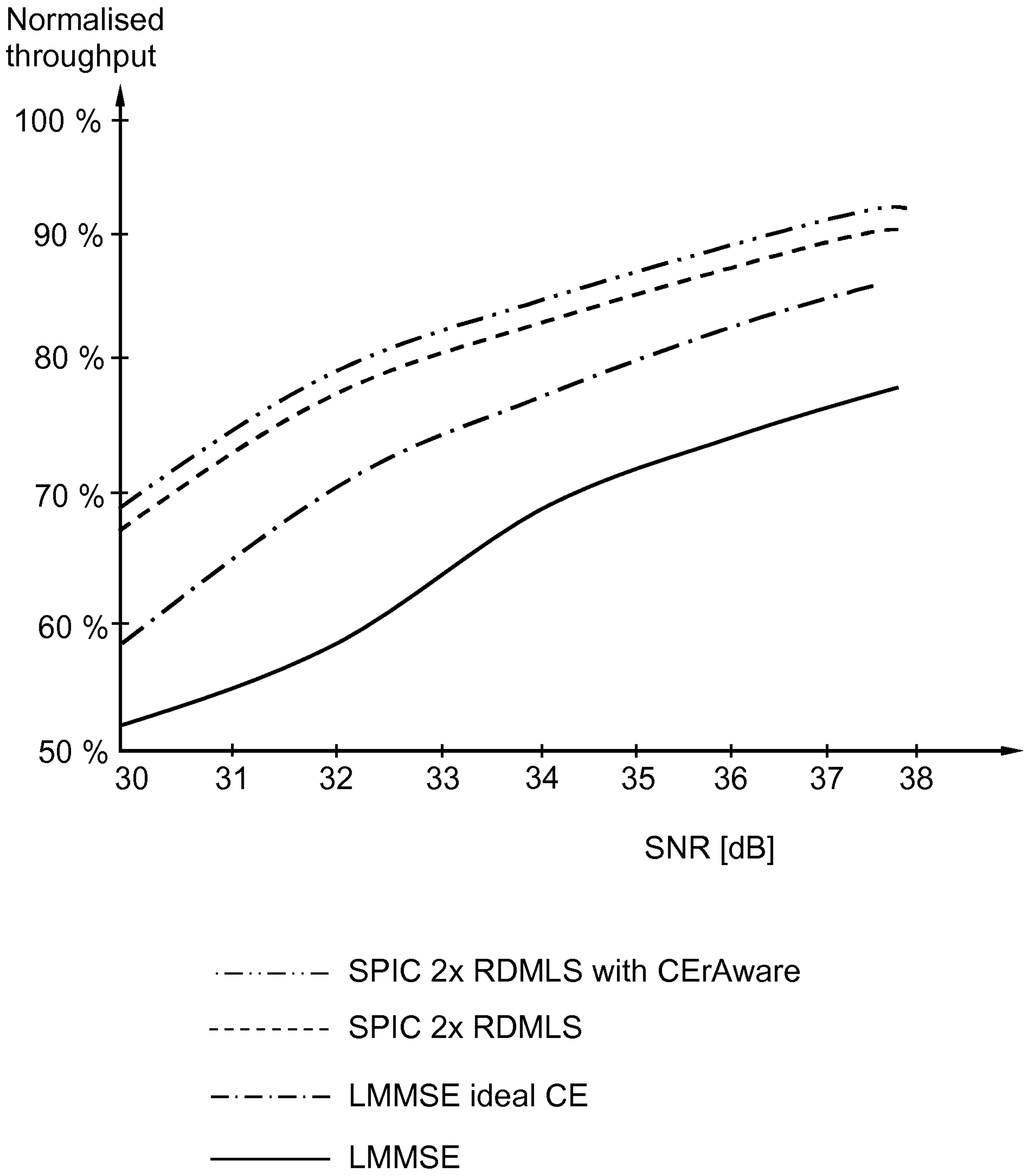
Normalised
throughput
100 %
90 %
80 %
70 %
60 %
50 %
30
31
32
33
34
35
36
37
38
SNR [dB]
SPIC 2x RDMLS with CErAware
SPIC 2x RDMLS
LMMSE ideal CE
LMMSE

Fig. 4C

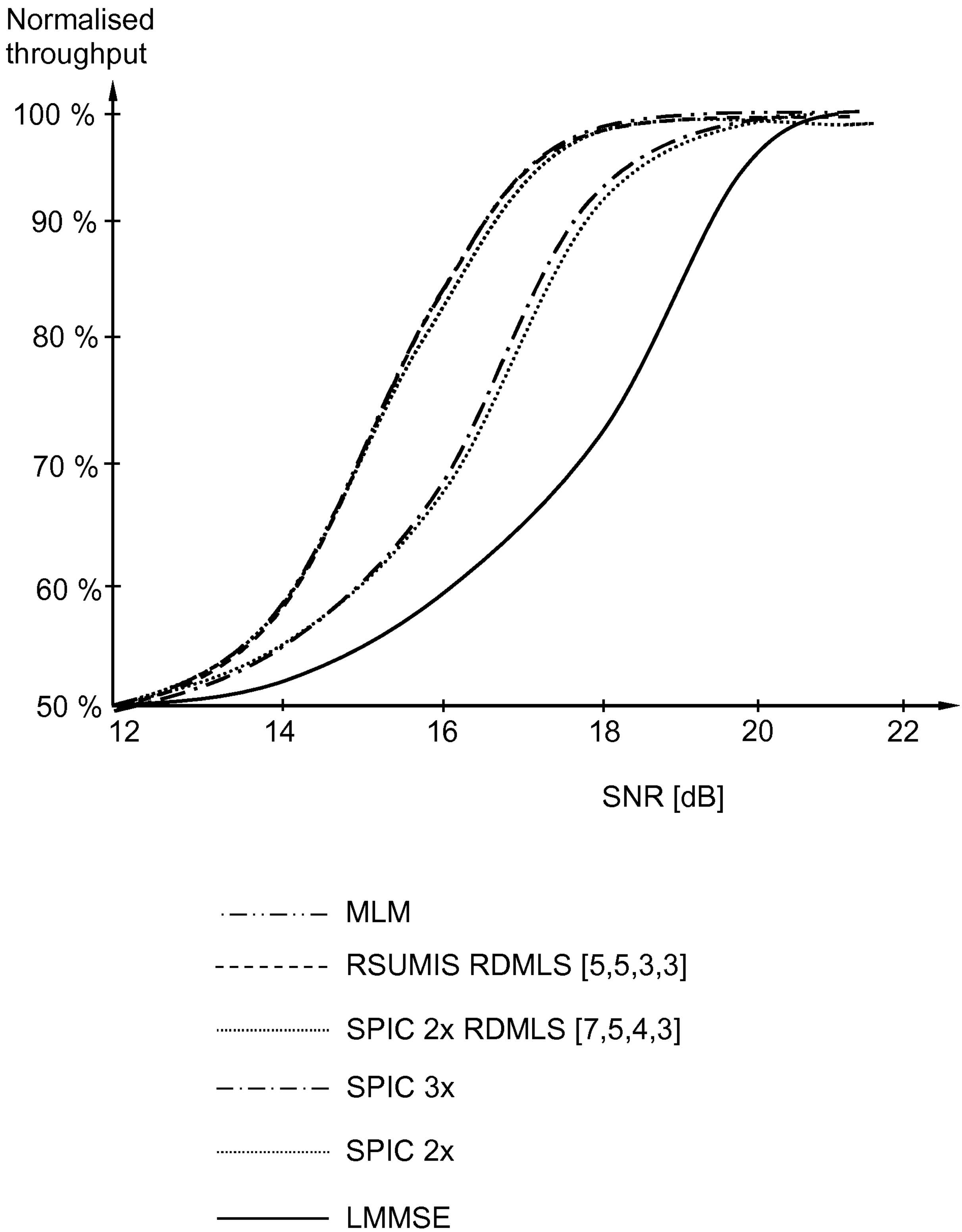
Normalised
throughput
100 %
90 %
80 %
70 %
60 %
50 %
12
14
16
18
20
22
SNR [dB]
MLM
RSUMIS RDMLS [5,5,3,3]
SPIC 2x RDMLS [7,5,4,3]
SPIC 3x
SPIC 2x
LMMSE

Fig. 4D

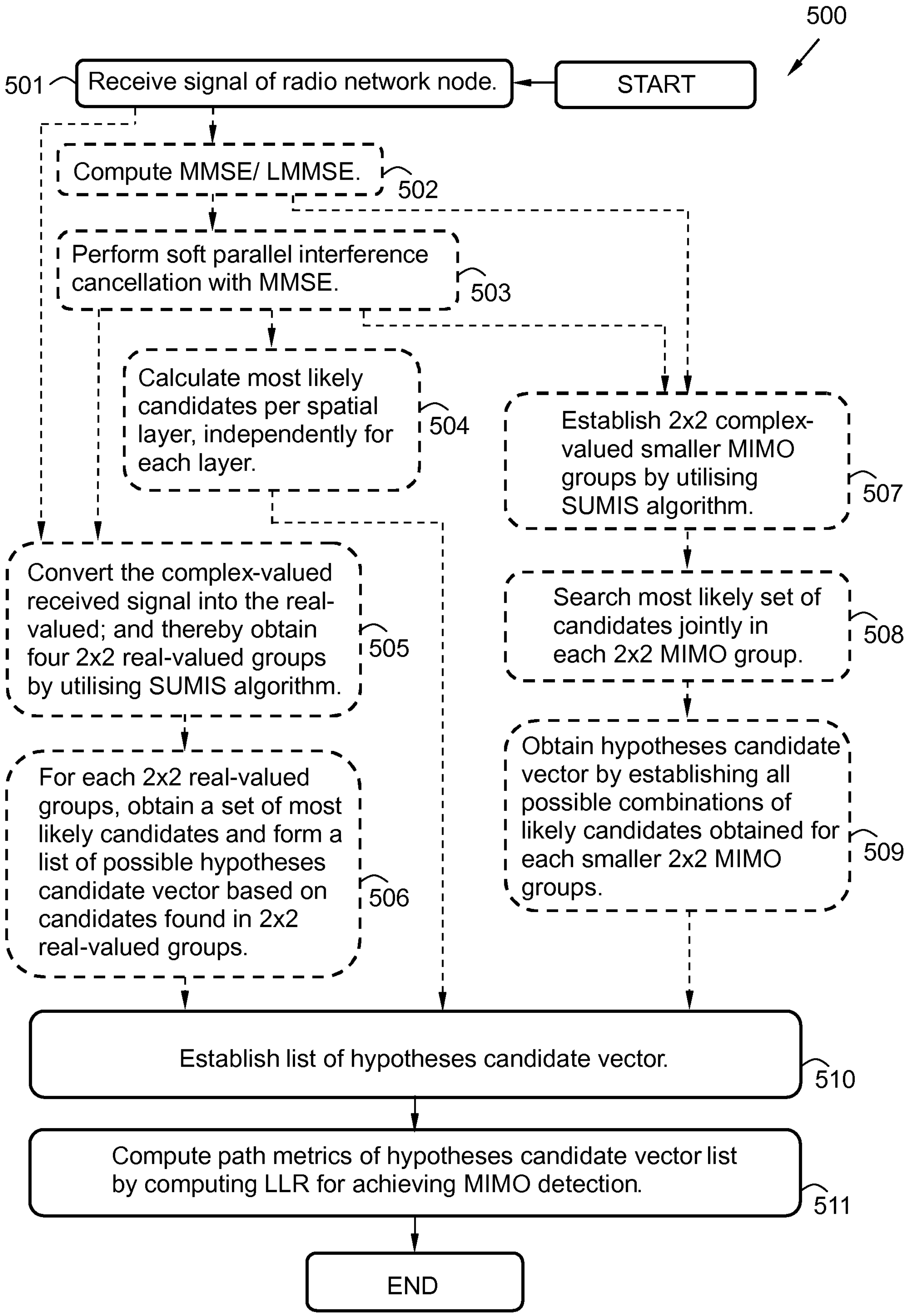
500
501
Receive signal of radio network node.
START
Compute MMSE/ LMMSE.
502
Perform soft parallel interference cancellation with MMSE.
503
Calculate most likely candidates per spatial layer, independently for each layer.
504
Establish 2x2 complex-valued smaller MIMO groups by utilising SUMIS algorithm.
507
Convert the complex-valued received signal into the real-valued; and thereby obtain four 2x2 real-valued groups by utilising SUMIS algorithm.
505
Search most likely set of candidates jointly in each 2x2 MIMO group.
508
For each 2x2 real-valued groups, obtain a set of most likely candidates and form a list of possible hypotheses candidate vector based on candidates found in 2x2 real-valued groups.
506
Obtain hypotheses candidate vector by establishing all possible combinations of likely candidates obtained for each smaller 2x2 MIMO groups.
509
Establish list of hypotheses candidate vector.
510
Compute path metrics of hypotheses candidate vector list by computing LLR for achieving MIMO detection.
511
END

Fig. 5

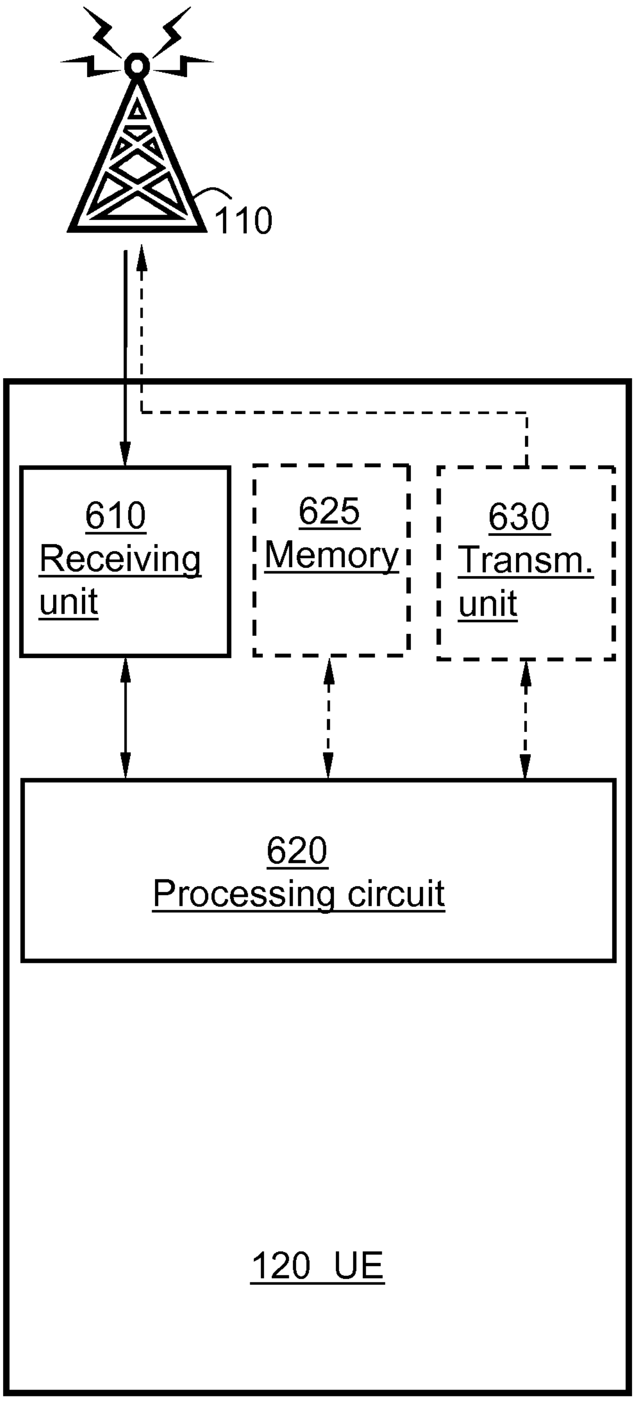
110
610
Receiving unit
625
Memory
630
Transm. unit
620
Processing circuit
120 UE

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8559543 B1
- US 20120219097 A1
- US 20080069262 A1